(19) Europäisches Patentamt
European Patent Office
Office européen des brevets

(11) EP 2 129 096 A1

(12) EUROPEAN PATENT APPLICATION

(43) Date of publication:
02.12.2009 Bulletin 2009/49

(21) Application number: 08170380.3

(22) Date of filing: 01.12.2008

(51) Int Cl.:
H04N 1/00 (2006.01) H04N 1/401 (2006.01)
H04N 1/407 (2006.01) H04N 1/60 (2006.01)

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 28.05.2008 JP 2008139180

(71) Applicant: Konica Minolta Business Technologies, INC.
Tokyo 100-0005 (JP)

(72) Inventor: Yasunaga, Yutaka
c/o Konica Minolta Business Technologies, Inc.
Tokyo 100-0005 (JP)

(74) Representative: Gille Hrabal Struck Neidlein Prop Roos
Brucknerstraße 20
40593 Düsseldorf (DE)

# (54) Image forming apparatus and stabilization control method

(57) Disclosed is an image forming apparatus including: a density nonuniformity correction section (141) to execute a density nonuniformity correction processing in a main scanning direction to image data which is input; and a control section (110) to control an execution of a stabilization control processing, and to control an execution of the density nonuniformity correction processing by the density nonuniformity correction section, wherein the control section sets a correction function of the density nonuniformity correction section to be invalid when the stabilization control processing is regularly executed.

FIG.1

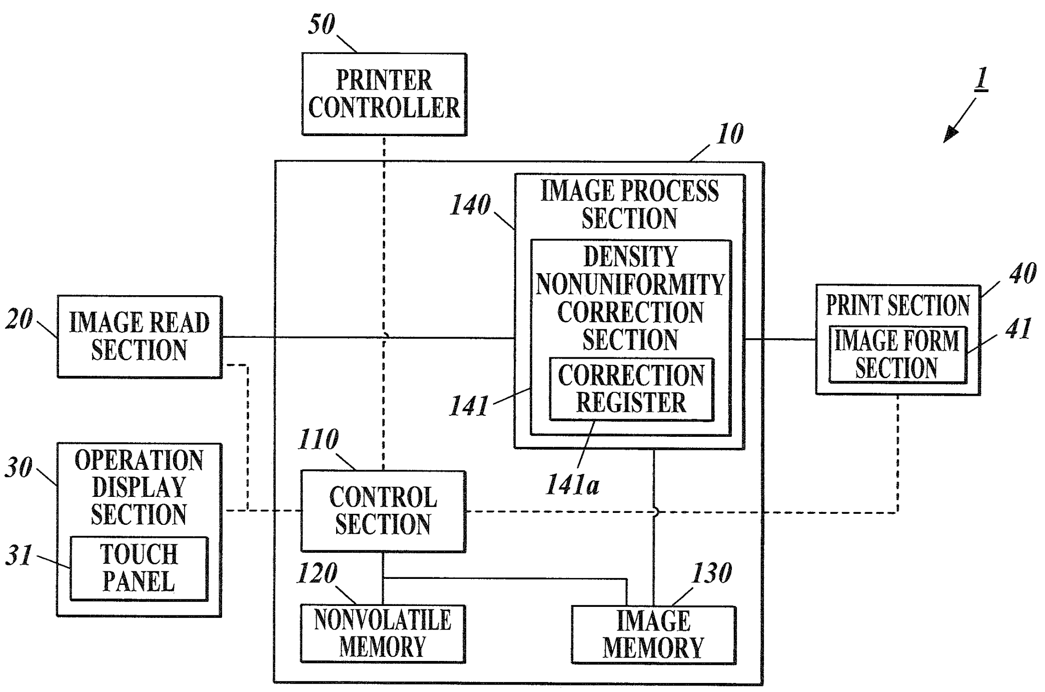




Printed by Jouve, 75001 PARIS (FR)

## Description

BACKGROUND OF THE INVENTION

Field of the Invention

The present invention relates to an image forming apparatus and a stabilization control method.

Description of Related Art

Generally, an image forming apparatus such as a copier and printer has a stabilization control processing function to adjust each section of the apparatus. This is because an output value of each section changes due to a mechanical factor or a change of ambient environment.

An example of the stabilization control processing is, for example, as Japanese Patent Application Laid-Open Publication No. 2007-189655 shows, a density adjusting method to execute a tone correction by using a gamma sensor or by a calibration. This document discloses an image forming apparatus which executes the following processing. For example, based on an output instruction value to instruct a density of an image to be formed and a correspondence relation with a formation density value of the image to be formed, a tone correction curve indicating a correspondence relation between a predetermined standard density value and the output instruction value is generated. Then, when the output instruction value corresponding to a maximum value of the standard density value is less than a maximum value of the output instruction value in the tone correction curve, the tone correction curve is corrected so that the output instruction value corresponding to the maximum value of the standard density value matches the maximum value of the output instruction value. Calibration data is created based on the corrected tone correction curve.

Moreover, in addition to the stabilization control processing, there is an image forming apparatus which has a density nonuniformity correction processing function to uniformize a density in main scanning direction.

In the case of the image forming apparatus, if the above-described stabilization processing is executed when the density nonuniformity correction processing is executed so that a correction value regarding the gamma sensor is changed, a problem that color shades of the images before and after the stabilization control processing becomes different occurs.

SUMMARY OF THE INVENTION

A present invention is achieved in view of above problems, and an object of the present invention is to reduce a change in a color shade which is due to a stabilization control processing even when a density nonuniformity correction is executed.

In order to achieve at least one of the above objects, an image forming apparatus reflecting one aspect of the present invention includes: a density nonuniformity correction section to execute a density nonuniformity correction processing in a main scanning direction to image data which is input; and a control section to control an execution of a stabilization control processing, and to control an execution of the density nonuniformity correction processing by the density nonuniformity correction section, wherein the control section sets a correction function of the density nonuniformity correction section to be invalid when the stabilization control processing is regularly executed.

BRIEF DESCRIPTION OF THE DRAWINGS

The present invention will completely be understood by the following detailed description and accompanying drawing, but they are not for limiting the scope of the invention, wherein:

FIG. 1 is a functional configuration view of an image forming apparatus according to a first embodiment;
FIG. 2 is a view showing an example of a correction image;
FIG. 3 is a view of relation between an auxiliary line and a correction reference position;
FIG. 4 is a view showing an example of a register map for a correction register;
FIG. 5 is a flowchart of a density nonuniformity correction processing according to the first embodiment;
FIG. 6 is a view showing an example of a machine status screen;
FIG. 7 is a view showing an example of adjustment screen;
FIG. 8 is a view showing an example of a density nonuniformity correction setting screen;
FIG. 9 is a view showing an example of a copy setting screen;
FIG. 10 is a flowchart of a normal mode;
FIG. 11 is a flowchart of a stabilization control processing according to the first embodiment;

FIG. 12 is a view showing an example of a service mode screen;
FIG. 13 is a view showing an example of a process adjustment screen;
FIG. 14 is a view showing an example of a drum character adjustment screen;
FIG. 15 is a view showing an example of a gamma automatic adjustment screen;
FIG. 16 is a view showing an example of a density nonuniformity correction validity/invalidity selection screen;
FIG. 17 is a flowchart of an invalidation processing execution;
FIG. 18 is a flowchart of the invalidation processing execution;
FIG. 19 is a flowchart of the invalidation processing execution;
FIG. 20 is a flowchart of a density nonuniformity correction processing according to a second embodiment;
FIG. 21 is a flowchart of a normal mode according to the second embodiment; and
FIG. 22 is a flowchart of a stabilization control processing according to the second embodiment.

DETAILED DESCRIPTION OF THE PREFERRED EMBODIMENTS

[First embodiment]

In the following, the first embodiment of the present invention will be described in detail with reference to the drawings.

Firstly, a configuration will be explained.

Fig. 1 shows a functional configuration of an image forming apparatus according to the first embodiment.

The image forming apparatus 1 of the first embodiment reads an image from an original document to form the read image on a sheet. Then, the apparatus receives page data including image data, job information including setting information such as image formation condition of each of the image data, and the like from an external apparatus and the like, and forms the image on the sheet based on the received job information. Incidentally, the image forming apparatus 1 may be a digital multifunction peripheral provided with a finishing section executing finishing to the sheet on which the image is formed and the like.

As shown in Fig. 1, the image forming apparatus 1 includes a body control section 10, an image read section 20, an operation display section 30, a print section 40, a printer controller 50 and the like.

The body control section 10 includes a control section 110, a nonvolatile memory 120, an image memory 130, an image process section 140 and the like, and each of the sections is controlled by the control section 110.

The control section 110 is composed of a Central Processing Unit (CPU), a Read Only Memory (ROM), a Random Access Memory (RAM) and the like. The control section 110 reads a system program, various application programs, and a program or data specified among various pieces of data, which are stored in the ROM or the nonvolatile memory 120, to expand them in the RAM, and executes various processings in cooperation with the program expanded in the RAM to collectively control each section of the image forming apparatus 1.

For example, the control section 110 switches a copy mode, printer mode, and scanner mode according to an instruction signal input from the operation display section 30 or from the external apparatus through the printer controller 50, and executes controls of copying, printing, reading of the image data and the like.

The control section 110 reads various of pieces of data necessary for a density nonuniformity correction processing program and a stabilization control processing program according to the first embodiment from the ROM or the nonvolatile memory 120, and controls the density nonuniformity correction processing and the stabilization control processing in cooperation with these programs and various of pieces of data.

The density nonuniformity correction processing is as follows. Firstly, a processing to create a correction image composed of a band-like image and an auxiliary line is executed. The band-like image is an image which extends in a main scanning direction and has a predetermined density. The auxiliary line is placed at a correction reference position which is set per predetermined number of pixels in the main scanning direction in the band-like image, and extends in a vertical scanning direction. Next, an image form section 41 forms the created correction image on a sheet to output a correction chart. Based on the output correction chart, an input of a correction value for pixel density at the correction reference position is received by the operation display section 30. According to the received correction value, a density nonuniformity correction section 141 executes a liner interpolation processing of the pixel density between each of the correction reference position (correction block). Then, a correction of each pixel density of the image to be formed is executed based on a result of the liner interpolation processing for each of the correction blocks.

Fig. 2 shows an example of the correction chart where the correction image is formed on a sheet.

As shown in Fig. 12, the correction image P includes a plurality of band-like images P1-P10 and a plurality of auxiliary lines 1a-1b. The band-like images P1-P10 extend in the main scanning direction X with previously set density. The auxiliary lines 1a-1b are formed on the band-like images P1-P10.

Each of the band-like images P1-P10 has a density which is different from that of the band-like image adjacent in the vertical scanning direction Y, and the band-like images P1-P10 are arranged so that the density of each of the band-like images P1-P10 gradually thickens or dilutes from the tip of a sheet feeding direction (vertical scanning direction Y) to the end.

FIG. 3 shows a view of relation between the auxiliary line and the correction reference position.

A main scanning writing reference signal (INDEX signal) is a timing signal which is generated at the time when a laser of an exposure device passes through a sensor set in a vicinity of a scanning start position of the main scanning direction when the laser scans in the main scanning direction.

A main scanning validity writing signal (HV signal; Horizontal Valid signal) is generated based on a width of a sheet size in the main scanning direction, and is a signal which indicates a period from a time when the HV signal rises (High) to a time when the HV signal falls (Low) as a valid region of one line in the main scanning direction.

A vertical scanning validity writing signal (VV signal; Vertical Valid signal) is a signal which indicates a valid region signal of the whole image region of the image data.

The correction reference position is a position which separates a length of the HV signal corresponding to a period from HS to HE into previously set number of pixels (for example, 1024 pixels) unit. Thus, it is a rare case that any one of the correction reference positions matches a sheet center position. However, a time from rising of the INDEX signal to outputting of a pixel signal of the sheet center position is constant, and a time from rising of the INDEX signal to HS of the HV signal is constant. Therefore, a time from HS of the HV to outputting of the pixel signal of the sheet center position is also constant, thereby a position of the auxiliary line to be formed on a sheet, which corresponds to each of the correction reference position, can be calculated based on the HV signal.

With regard to calculating the position of the auxiliary line, for example, an example of the case where the sheet center position is a position equivalent to 4000 clocks from rising of the INDEX signal, HS is a position equivalent to 100 clocks, HE is a position equivalent to 7900 clocks, a sheet size is A4 size where a length in the main scanning direction is 210 mm, a writing start position A of the sheet is calculated in 600 dpi, and the correction reference position nearest to the writing start position A is calculated, will be described.

The number of clocks from rising of the INDEX signal to the writing start position A can be calculated by using the following formula.

$$\text{The writing start position A} = 4000 - (210 \times (600/25.4))/2 = 1520$$

The writing start position A is 1520 clocks from rising of the INDEX signal, namely 1420 clocks from HS. Since the correction reference positions are located in every 1024 clocks from HS, the auxiliary line which is located within 1420 clocks from HS and corresponds to the correction reference position having an identity number 0 or 1 is not formed, a position obtained by adding 608 (= 1024 × 2 -1420) clocks to a position of 1420 clocks from HS can be calculated as a position of the auxiliary line corresponding to the correction reference position having an identity number 2. Thus, the position of the auxiliary line corresponding to each of the correction reference position in a sheet can be calculated.

The stabilization control processing is a processing to adjust a status of the image forming apparatus 1 to an initial stable status. For example, it is a processing to adjust a charged potential or drum rotation frequency, or to adjust an output density with a gamma sensor, in the image forming apparatus 41. The stabilization control processing is regularly executed when a previously set condition such as a predetermined time and a predetermined number of sheets to be ejected is satisfied, or executed when the operation display section 30 receives user's instruction.

The stabilization control processing according to the first embodiment is executed with a correction function of the density nonuniformity correction section 141 is set to invalid when the stabilization control processing is regularly executed, and executed by receiving an instruction to validate or invalidate an execution of the density nonuniformity correction section 141 from the operation display section 30 so as to perform setting of the density nonuniformity correction section 141 according to the instruction to execute the stabilization control processing when the stabilization control processing is executed based on an instruction from the operation display section 30 to execute the stabilization control processing.

The nonvolatile memory 120 stores the density nonuniformity correction processing program and the stabilization control processing program of this embodiment, necessary data, data processed by various programs and the like, in addition to various processing programs and data regarding the image formation.

The image memory 130 is composed of a Hard Disk Drive (HDD), a Dynamic RAM (DRAM) and the like, and stores image data so as to enable reading and writing of the data. The image memory 130 stores image data input from the image read section 20 or the printer controller 50 to save it, and reads image data stored in the image memory 130 to output it to the image process section 140, according to an instruction from the control section 110.

The image process section 140 executes various processings to the image data input from the image read section 20, the printer controller 50, and the image memory 130 to output it to the control section 110 or the image memory 130. The image process section 140 converts an analog image signal input from the image read section 20 into digital image data, compresses the digital image data to output it to the image memory 130, and extends the compressed image data to output it, for example.

Moreover, the image process section 140 generates the HV signal, the VV signal and the clock signal (CLK signal) to output them to the control section 110. For example, the CLK signal is generated by a crystal oscillator and the like provided in the image process section 140 (or on a substrate mounting the image process section 140).

Furthermore, the image process section 140 includes the density nonuniformity correction section 141.

The density nonuniformity correction section 141 includes a correction register 141a to store a correction value set for each toner color by the control section 110. The density nonuniformity correction section 141 is a correction section to realize a correction function to store the correction value of each of the correction reference positions, which is input from the operation display section 30 and set by the control section 110, in the correction register 141a, to execute a linear interpolation for each of the correction reference positions based on the correction value stored in the correction register 141a, and to correct each pixel density to correct the density nonuniformity in the main scanning direction based on a result of the linear interpolation for each of the correction reference positions.

Fig. 4 shows an example of a register map of the correction register 141a.

As shown in Fig. 4, an address of the correction resister 141a, and a name and intended purpose of data of the address are indicated in a resister map P.

An address "00h" functions as a switch section to switch validity/invalidity of execution of the density nonuniformity correction section 141, and in the case of 0 the execution is set to be valid, and in the case of 1 the execution is set to be invalid. In addition, a mechanical switch which shuts off a signal input to the density nonuniformity correction section when the execution is invalid may be provided instead of the address "00h".

An address "01h" stores an initial value of the density nonuniformity correction processing to be executed by the density nonuniformity correction section 141.

An address "02h" and subsequent addresses are correction values for the correction reference positions set by the control section 110. In the first embodiment, the correction value to be stored in the correction register 141a is a difference amount (correction amount difference) from the correction value set for the immediately previous correction reference position. Incidentally, the correction value may be set for each of the correction reference positions.

The image read section 20 is composed of a CCD, an image read control section, an automatic document feeding section referred to as an Auto Document Feeder (ADF), a read section and the like. The image read control section controls the automatic document feeding section, the read section and the like based on an instruction from the control section 110 to be described to read images on a plurality of documents. The read analog image signal is output to the image process section 14. Here, the image is not limited to an image data such as a figure and photo, and includes text data such as a character and sign.

The image data (analog image signal) read by the image read section 20 is output to the image process section 140, and subjected to A/D conversion and various image processings to be output to the print section 40.

The operation display section 30 is composed of a Liquid Crystal Display (LCD), a touch panel 31 provided so as to cover the LCD, an operation display control section, unshown operation keys and the like.

The operation display section 30 displays various setting screens for inputting various setting conditions, various screens as shown in Figs. 6-9, and Figs. 12-16, various processing results and the like on the LCD, according to a display instruction signal input from the control section 110 by the operation display control section. Moreover, the operation display section 30 outputs an operation signal input from a group of operation keys or a touch panel 31 to the control section 110.

The print section 40 executes an image forming processing in an electrophotography system based on input print data, and is composed of each section for print output such as a sheet feeding section, a sheet feeding transport section, the image form section 41, a discharging section and the like, and a print control section.

The sheet feeding section includes a plurality of feeding trays. In each of the feeding trays, sheets previously identified by each sheet type are held, and the sheets are transported one by one from uppermost part to the sheet feeding transport section.

The sheet feeding transport section transports the sheets transported from the feeding tray to a transfer device of the image form section 41 through a plurality of intermediate rollers, a resist roller and the like.

The image form section 41 includes a photosensitive drum, a charging device, an exposure device including a laser output section to output laser light based on image data and a polygon mirror to allow the laser light to scan in the main scanning direction, a development device, the transfer device, a cleaning section and a fixing device. The image form section 41 is, by the print control section, controls each section of the print section 40 such as the image form section 41 according to an instruction from the control section 110, and forms image on the sheet based on the data input from the image process section 140.

Specifically, it irradiates the photosensitive drum charged by the charging device with the laser light by the exposure device to form an electrostatic latent image, puts a charged toner on a surface of the photosensitive drum on which the electrostatic latent image is formed by the development device to develop the electrostatic latent image. Then, the toner image formed on the photosensitive drum is transferred on the sheet in the transfer device. After the toner image is transferred to the sheet, residual toner and the like on the surface of the photosensitive drum are removed by the cleaning device. The toner image transferred to the sheet is heat-fixed by the fixing device, and the sheet on which the toner image is heat-fixed is held by a paper exit roller to be discharged from a discharge exit.

The printer controller 50 outputs data transmitted from the external apparatus such as a Personal Computer (PC) connected to a Local Area Network (LAN) and the like when the image forming apparatus 1 is used as a network printer.

Next, an operation of the first embodiment will be explained.

Fig. 5 shows a flowchart of the density nonuniformity correction processing according to the first embodiment. This invention is executed by the control section 110 in cooperation with each section.

Firstly, the control section 110 allows the operation display section 30 to display the machine status screen indicating a machine status of the image forming apparatus 1 according to an input instruction from the operation display section 30.

Fig. 6 shows an example of the machine status screen G1.

As shown in Fig. 6, on the machine status screen G1, a toner condition and a status of the sheet held in each of the feeding tray are displayed, and an adjustment button B1 for displaying an adjustment screen on which an adjustment instruction of each section of the image forming apparatus 1 is executed.

The control section 110 allows the operation display section 30 to display the adjustment screen when the adjustment button B1 is depressed. Fig. 7 shows an example of an adjustment screen G2.

As shown in Fig. 7, on the adjustment screen G2, a density nonuniformity correction setting button B2 for displaying a density nonuniformity correction setting screen, and a button for displaying a screen for other settings are provided.

The control section 110 allows the operation display section 30 to display the density nonuniformity correction setting screen when the density nonuniformity correction setting button B2 is depressed, and starts a density nonuniformity correction processing mode (Step S1).

Fig. 8 shows an example of a density nonuniformity correction setting screen G3.

As shown in Fig. 8, on the density nonuniformity correction setting screen G3, a sheet image region E1, an correction reference position buttons Bi0-Bi8, toner color buttons By, Bm, Bc, Bk, clear buttons Bcy, Bcm, Bcc, Bck, a correction value display region E2, invalidation buttons By0, Bm0, Bc0, Bk0, a numeric key pad B3 including + and -, a display region E3, a copy button B4, an OK button B5, and a cancel button B6 are provided.

In sheet image region E1, an image figure of a positional relation between the correction reference position and the correction chart is displayed. The correction reference position buttons Bi0-Bi8 receive an instruction to select each correction reference position. The toner color buttons By, Bm, Bc, Bk receive an instruction to select the toner color. The clear buttons Bcy, Bcm, Bcc, Bck receive an instruction to return the correction value of each toner color to the initial value. In the correction value display region E2, the correction value corresponding to each toner color button and each correction reference position button is displayed. The invalidation buttons By0, Bm0, Bc0, Bk0 receive an instruction to change the correction value set in each of the toner color button to a invalidity correction value by which same result as the case that the correction function of the density nonuniformity correction processing is invalid can be obtained. In the display region E3, the correction value instructed by the numeric key pad B3 is displayed. The copy button B4 receives an instruction to display the copy setting screen.

The control section 100 judges whether or not the density nonuniformity correction mode is to be ended (Step S2). As the case that the density nonuniformity correction mode is ended in Step S2, there are two cases where the cancel button B6 is depressed and the OK button B5 is depressed. The control section 110 ends the processing when the cancel button B6 is depressed (Step 2; Cancel). When the OK button B5 is depressed, the control section 110 stores the correction value displayed in the correction value display area E2 into the nonvolatile memory 120 (Step 3), and ends the density nonuniformity correction processing.

When the density nonuniformity correction mode is not ended, for example, when a button other than the OK button B5 and the cancel button B6 provided on the density nonuniformity correction setting screen G3 is depressed (Step S2; No), the control section 110 receives a setting of the correction value (Step S4).

The setting of the correction value in Step S4 is a processing where the correction value is selected by a user by depressing any one of the toner color buttons By, Bm, Bc, Bk and any one of the correction reference position buttons Bi0-Bi8 respectively, the toner color and the correction value of the correction reference position which correspond to the selected two buttons are set to values of depressed keys of numeric key pad B3, and when the invalidation buttons By0, Bm0, Bc0, Bk0 are depressed, the correction value of the toner color which correspond to the depressed invalidation button is set to the invalidity correction value.

Each of the correction value set in the density nonuniformity correction setting screen G3 according to the first embodiment is a difference amount (correction amount difference) from the correction value set in the immediately previous correction reference position button with regard to each toner color. For example, when zero (0) is set as the correction value corresponding to the toner color button By and the correction reference position button BiO, as the correction value which corresponds to the toner color button By and the correction reference position button BiO, the difference amount from the immediately previous correction amount zero (0) is set as the correction value.

Incidentally, the correction value may be set every correction reference position.

After Step S4, when the copy button B4 is depressed, the control section 110 displays the copy setting screen. Fig. 9 shows and example of a copy setting screen G0.

As shown in Fig. 9, the copy setting screen G0 includes a document setting region E10, a color setting region E11, a magnification setting region E12, an applied setting region E13, an image quality adjusting region E14, an output setting region E15, a double-sided/single-sided setting region E16 and a sheet setting region E17. The copy setting screen G0 is a screen for executing a setting of various output modes of the image to be formed and various settings of the sheets on which the image is to be formed. Incidentally, the output mode is a mode of operation of each output pattern regarding an output color (black, color and the like), magnification, double-sided/single-sided and the like. In the sheet setting region E17, feeding tray buttons B7a-B7d to receive an instruction to select the feeding tray in which the sheets to be fed are held are provided.

The control section 110 receives the setting of the sheets in the copy setting screen G0 (Step S5). The setting of the sheets in Step S5 is a processing where the sheet held in the feeding tray corresponding to the depressed feeding tray button is set by a user by depressing any one of the feeding tray buttons B7a-B7b in the sheet setting region E17.

After setting of the correction value and setting of the sheet, the control section 110 executes a correction image creation processing (Step S6). The correction image creation processing executed in Step S6 is a processing where the control section 110 expands the band-like image data in a memory region according to a set sheet size, which data is formed in an image formable region according to the sheet size, calculates a position of a marker image to be formed on the sheet according to the sheet size and the correction reference position, and creating the correction image data by superimposing the image data of the marker image onto the band-like image data.

The control section 110 executes setting of the density nonuniformity correction section 141 after Step S6 (Step S7).

The setting of the density nonuniformity correction section 141 in Step S7 is a processing where the control section 110 stores the correction value of each correction reference position set in Step S4 into a corresponding address of the correction register in the density nonuniformity correction section 141. For example, when the invalidation button for the certain toner color is depressed, the control section 110 changes the address "00h" of the correction register for the toner color to zero (0), or changes the address "01h" and all addresses thereafter to zero (0) as the invalidity correction value. When the invalidation button is not depressed, the control section 110 stores the correction value of the correction reference value selected by the toner color button and the correction reference position button into an address corresponding to the correction reference position.

Moreover, the setting of the density nonuniformity correction section 141 is a process where the density nonuniformity correction section 141 executes the linear interpolation between the correction reference positions based on the correction value stored in the correction register to calculate the density value for each pixel according to a result of the linear interpolation.

After Step S7, the control section 110 sets the HV signal and VV signal (Step S8), and outputs the correction image data to the print section 40 (Step S9). The print section 40 forms the correction image on the sheet set based on the correction image input from the control section 110 to output the correction chart. When the correction chart is output, the control section 110 returns the processing to Step S2.

Fig. 10 shows a flowchart of a processing (normal mode) when the image is formed after the density nonuniformity correction processing ends. This processing is executed by the control section 110 in cooperation with each section.

The control section 110 executes the setting of various output modes of the image to be formed and various settings of the sheets on which the image is to be formed and the like in the copy setting screen G0 (Step S11).

Then, the control section 110 reads the correction value from the nonvolatile memory 120 when a copy start button which is a hardware key of the operation display section 30 is depressed, and outputs the correction value to the density nonuniformity correction section 141 to execute the setting of the density nonuniformity correction section 141 (Step S12).

After Step S12, the control section 110 executes setting of the HV signal and the VV signal (Step S13), outputs the specified image data in the image memory 130 to the print section 40 (Step S14), and ends processing in the normal mode. The print section 40 forms the image on the sheet set based on the image data input from the control section 110.

Fig. 11 shows a flow chart of the stabilization control processing according to the first embodiment.

The stabilization control processing is executed by the control section 110 in cooperation with each section.

The control section 110 judges whether or not an automatic stabilization processing timing comes (Step S21).

The automatic stabilization processing timing is timing when a predetermined condition is satisfied since the automatic stabilization processing starts to be executed, such as timing when a predetermined time has passed since the automatic stabilization processing starts and timing when a predetermined number of sheets have been discharged.

When the automatic stabilization processing timing comes (Step S21; Yes), the control section 110 executes an execution invalidation processing of a density nonuniformity correction processing to be described (Step S22), executes the specified stabilization control processing (Step S23), and ends the stabilization control processing.

When the automatic stabilization processing timing does not come (Step S21; No), the control section 110 judges whether or not there is an instruction to execute a manual stabilization control processing (Step S24).

The judgment whether or not there is the instruction to execute a manual stabilization control processing is a judgment based on an instruction input from a user through the operation display section 30.

For example, the control section 110 allows the operation display section 30 to display a service mode screen on which an instruction is input, which instruction is to adjust setting of each section of the image forming apparatus 1 according to an input instruction from the operation display section 30.

Fig. 12 shows an example of a service mode screen G10.

As shown in Fig. 12, on the service mode screen G10, there are provided buttons for screen transition to a screen on which the instruction to adjust setting of each section is received, for example, there is provided a process adjustment button B10 which allows a process adjustment screen for executing a process adjustment of the image form section 41 to be displayed.

Fig. 13 shows an example of a process adjustment screen G11.

As shown in Fig. 13, on the process adjustment screen G11, there are provided buttons for displaying setting screens of various process adjustment items, for example, a drum characteristics adjustment button B11 for displaying a drum characteristics adjustment screen on which a drum characteristics is adjusted.

Fig. 14 shows an example of a drum characteristics adjustment screen G12.

As shown in Fig. 14, on the drum characteristics adjustment screen G12, there are buttons for displaying setting screens of various drum characteristics items, for example, there is provided a gamma automatic adjustment button B12 for displaying a gamma automatic adjustment screen on which the density is adjusted by the gamma sensor.

Fig. 15 shows an example of a gamma automatic adjustment screen G13.

As shown in Fig. 15, on the gamma automatic adjustment screen G13, there are provided a region in which various setting buttons and a setting status when the density is adjusted by the gamma sensor, and a start button B13 to receive a start of executing the density adjustment in the condition set on the gamma automatic adjustment screen G13.

When the start button B13 on the gamma automatic adjustment screen G13 is not depressed (Step S24; No), the control section 110 executes the normal mode processing (Step S25), and ends the stabilization control processing.

When the start button B13 on the gamma automatic adjustment screen G13 is depressed (Step S24; Yes), the control section 110 judges whether or not there is setting of the density nonuniformity correction processing (Step S26). In other words, the screens shown in Figs 12-15 function as first input sections to instruct executing the stabilization control processing.

In the judgment whether or not there is the setting of the density nonuniformity correction processing in Step S26, the control section 110 judges that there is not the setting of the density nonuniformity correction processing, for example, when all of the correction values stored in the nonvolatile memory 120 are zero (0), or when the invalidation buttons of all of the toner colors are depressed.

When there is not the setting of the density nonuniformity correction processing (Step S26; No), the control section 110 advances the processing to Step S23. When there is the setting of the density nonuniformity correction processing (Step S26; Yes), the control section 110 allows the operation display section 30 to display a density nonuniformity correction validity/invalidity selection screen to judge whether or not the density nonuniformity correction processing is set to be valid (Step S27).

Fig. 16 shows an example of a density nonuniformity correction validity/invalidity selection screen G14.

As shown in Fig. 16, on the density nonuniformity correction validity/invalidity selection screen G14, there are provided a message region E18, Yes button B14a and No button B14b.

In the message region E18, for example, a message indicating that there is the setting of the density nonuniformity correction processing, such as "Density nonuniformity correction function is set. Validate density nonuniformity correction to execute stabilization control processing?", and a message asking a user whether or not the correction function of the density nonuniformity correction section needs to be validated when the stabilization control processing is executed, are displayed. The Yes button B14a is a button which receives an instruction to validate the execution of the density nonuniformity correction section. The No button B14b is a button which receives an instruction to invalidate the execution of the density nonuniformity correction section. The Yes button B14a and the No button B14b function as second input sections.

The control section 110 advances to Step 22 when the No button B14b on the density nonuniformity correction validity/invalidity selection screen G14 is depressed, namely when the density nonuniformity correction processing is set to be invalid (Step S27; No).

When the Yes button B14a on the density nonuniformity correction validity/invalidity selection screen G14 is depressed, namely the density nonuniformity correction processing is set to be valid (Step S27; Yes), the control section 110 reads the correction value from the nonvolatile memory 120, outputs the correction value to the density nonuniformity correction section 141 to execute setting of the density nonuniformity correction section 141 (Step S28), and advances to Step S23.

Figs 17, 18 and 19 show flowcharts of the execution invalidation processing executed in Step S22. Incidentally, in Step S22, any of these processing is executed.

Firstly, the execution invalidation processing shown in Fig. 17 will be explained.

The control section 110 switches the value of the address "00h" in the correction register 141a of the density nonuniformity correction section 141 to zero (0), namely execution invalidity status (Step S31), stops outputting all of the correction value stored in the correction register 141a (Step S32), and ends the execution invalidation processing.

Thus, by switching the value of the address "00h" in the correction register 141a as a switch section to zero (0), which is a value indicating the execution invalidity, to set the density nonuniformity correction section 141 to be the execution invalidity status, it is possible to invalidate the correction function of the density nonuniformity correction processing at the time of the stabilization control processing.

An invalidating processing shown in Fig. 18 will be explained.

The control section 110 changes the values of the address "01h" and the addresses thereafter to zero (0) as the invalidity correction value (Step S41), outputs the changed correction value from the correction register 141a (Step S42), and ends the execution invalidation processing.

Thus, by changing the correction value in the correction register 141a to zero (0) as the invalidity correction value, it is possible to invalidate the correction function of the density nonuniformity correction processing at the time of the stabilization control processing.

An invalidating processing shown in Fig. 19 will be explained.

The control section 110 calculates the position of the gamma sensor from rising of the INDEX signal in the main scanning direction based on a period from rising of the INDEX signal to timing when the detection signal by the gamma sensor is obtained (Step S51).

The control section 110 converts the calculated position of the gamma sensor to the pixel coordinates in the main scanning direction (Step S52).

The control section 110 changes the correction value for the pixel corresponding to the pixel coordinates of the calculated position of the gamma sensor among the correction value stored in the correction register to zero (0) as the invalidity correction value, then outputs the correction value from the correction register 141a (Step S53), and ends the execution invalidation processing.

Thus, by changing the correction value for the pixel at the position corresponding to the sensor (gamma sensor in the first embodiment) which is influenced by the correction function of the density nonuniformity correction processing to zero (0) as the invalidity correction value, it is possible to invalidate the correction function of the density nonuniformity correction processing at the time of the stabilization control processing.

As described above, according to the first embodiment, since it is possible to eliminate and invalidate the correction function of the density nonuniformity correction processing when the stabilization control processing is regularly executed, a change in color shades of the images before and after the stabilization control can be reduced even when the density nonuniformity correction is executed before the stabilization control.

Moreover, when a user instructs to execute the stabilization control in addition to the regular stabilization control processing, since it is possible to execute the stabilization control processing with the execution of the density nonuniformity correction section validated or invalidated according to user's intention, convenience for a user can be improved.

[Second embodiment]

The second embodiment of the present invention will be described in detail with reference to the drawings.

Firstly, a configuration will be explained.

Since a mechanical configuration figure of the image forming apparatus 1 according to the second embodiment is same as that according to the first embodiment, illustrations are omitted, and only different points will be explained.

The control section 110 reads various pieces of data necessary for the density nonuniformity correction processing program and the stabilization control processing program according to the second embodiment from the ROM of the memory 120, and controls the density nonuniformity correction processing and the stabilization control processing in cooperation with the program and the various pieces of data.

The density nonuniformity correction processing according to the second embodiment is a processing where after the density nonuniformity correction processing according to the first embodiment, depending on whether or not it is in an initial mode, the correction value set by the density nonuniformity correction processing is stored as the first correction value or the second correction value in the nonvolatile memory 120.

The initial mode is a mode in which the correction value is set in the nonvolatile memory 120 in the status before the image forming apparatus 1 is delivered to a user, such as a status where the image forming apparatus 1 is in a production factory thereof.

Incidentally, since an example of the correction chart and the relation between the auxiliary line and the correction reference position are same as those of the first embodiment, illustrations and explanations about them are omitted.

The stabilization control processing according to the second embodiment executes the stabilization processing by setting the correction value set in the initial mode, namely the first correction vale in the correction register to invalidate the correction function of the density nonuniformity correction processing when the stabilization control processing is regularly executed. When the stabilization control processing is executed based on the instruction to execute the stabilization control processing from the operation display section 30, the instruction to validate or invalidate the execution of the density nonuniformity correction section 141 is received from the operation display section 30 to set the first correction value in the correction register when the execution of the density nonuniformity correction section 141 is invalid, or to set the summed value of the first correction value and the second correction value in the correction register when the density nonuniformity correction section 141 is valid, to execute the stabilization processing.

The nonvolatile memory 120 stores the density nonuniformity correction processing program, the stabilization control processing program, the necessary data and the data processed by various programs according to this embodiment, in addition to various pieces of processing programs and data regarding the image formation. Moreover, the nonvolatile memory 120 functions as a storage section to store the first correction value, and the second correction value different from the first correction value.

Since examples of the density nonuniformity correction section 141 and the register map of the correction register is same as those of the first embodiment, illustrations and explanations are omitted.

Next, an operation of the second embodiment will be explained.

Fig. 20 shows a flowchart of the density nonuniformity correction processing according to the second embodiment. This embodiment is executed by the control section 110 in cooperation with each section.

Firstly, the control section 110 executes the density nonuniformity correction processing (Step S61).

Since the density nonuniformity correction processing in Step S61 is same as that executed in the first embodiment, an illustration and explanation are omitted.

After Step S61, the control section 110 judges whether or not it is in the initial mode (Step S62). When it is in the initial mode (Step S62; Yes), the control section 110 stores the correction value set in Step S61 as the first correction value in the nonvolatile memory 120 (step 63), and ends the density nonuniformity correction processing.

When it is not in the initial mode (Step S62; No), the control section 110 stores the correction value set in Step S61 as the second correction value in the nonvolatile memory 120 (Step S64), and ends the density nonuniformity correction processing.

Fig. 21 shows a flowchart of a processing (in the normal mode) when the image is formed after the density nonuniformity correction processing according to the second embodiment ends. This processing is executed by the control section 110 in cooperation with each section.

The control section 110 executes setting of various output modes of the image to be formed and various settings of the sheet on which the image is formed (Step S71).

When the copy start button which is the hardware key of the operation display section 30 is depressed, the control section 110 reads the first correction value from the nonvolatile memory 120 (Step S72), and then reads the second correction value (Step S73).

The control section 110 sums (adds) up the first and second correction values, and outputs the summed value to the density nonuniformity correction section 141 to execute the setting of the density nonuniformity correction section 141 (Step S74).

In the processing to execute the setting of the density nonuniformity correction section 141 in Step S74, the control section 110 stores the summed value corresponding to each correction reference position in the corresponding address in the correction register of the density nonuniformity correction section 141. Then, the control section 110 executes the linear interpolation between the correction reference positions based on the summed value stored in the correction register of the density nonuniformity correction section 141 to calculate the density value of each pixel depending on the result of the linear interpolation.

After Step S74, the control section 110 sets the HV signal and the VV signal (Step S75), outputs the specified image data in the image memory 130 to the print section 40 (Step S76), and ends the processing in the normal mode. The print section 40 forms the image on the sheet set based on the image data input from the control section 110.

Fig. 22 shows a flowchart of the stabilization control processing according to the second embodiment.

This processing is executed by the control section 110 in cooperation with each section.

The control section 110 judges whether or not the automatic stabilization processing timing comes (Step S81). Since the automatic stabilization processing timing is same as that of the first embodiment, an explanation is omitted.

When the automatic stabilization processing timing comes (Step S81; Yes), the control section 110 reads the first correction value from the nonvolatile memory 120 (Step S82), and outputs the first correction value to the density nonuniformity correction section 141 to execute the setting of the density nonuniformity correction section 141 (Step S83).

In the processing to execute the setting of the density nonuniformity correction section 141 in Step S83, the control section 110 stores the first correction value corresponding to each correction reference position in the corresponding address in the correction register of the density nonuniformity correction section 141. Then the density nonuniformity correction section 141 executes the linear interpolation between the correction reference positions based on the first correction value stored in the correction register to calculate the density value of each pixel depending on the result of the linear interpolation.

After Step S83, the control section 110 executes the specified stabilization control processing (Step S84), and ends the stabilization control processing.

When the automatic stabilization processing timing does not come (Step S81; No), the control section 110 judges whether or not there is the instruction to execute the auto stabilization control processing (Step S85).

The judgment whether or not there is the instruction to execute the auto stabilization control processing in Step S85 is a judgment based on the instruction input by a user through the operation display section 30, and since it is same as that of the first embodiment, an explanation and screen examples necessary for the explanation is omitted.

When the start button B13 on the gamma auto adjustment screen G13 is not depressed (Step S85; No), the control section 110 executes the normal mode processing (Step S86), and ends the stabilization control processing.

When the start button B13 on the gamma auto adjustment screen G13 is depressed (Step S85; Yes), the control section 110 judges whether or not there is the setting of the density nonuniformity correction processing by the second correction value (Step S87).

In the judgment whether or not there is the setting of the density nonuniformity correction processing by the second correction value in Step S87, for example, the control section 110 judges whether or not there is the second correction value in the nonvolatile memory 120. In other words, when all of the second correction values stored in the nonvolatile memory 120 are zero (0), or when the invalidation buttons for all of the toner color are depressed, the control section 110 judges that there is not the setting of the density nonuniformity correction processing by the second correction value.

When there is not the setting of the density nonuniformity correction processing by the second correction value (Step S87; No), the control section 110 advances to Step S82. When there is the setting of the density nonuniformity correction processing by the second correction value (Step S87; Yes), the control section 110 allows the operation display section 30 to display the density nonuniformity correction validity/invalidity selection screen to judge whether or not the density nonuniformity correction processing by the second correction value is set to be valid (Step S88). Incidentally, since the density nonuniformity correction validity/invalidity selection screen is same as that of the first embodiment, an illustration and explanation is omitted.

When the No button B14b on the density nonuniformity correction validity/invalidity selection screen G14 is depressed, namely when the density nonuniformity correction processing by the second correction value is set to be invalid, the control section 110 advances to Step S82.

When the Yes button B14a on the density nonuniformity correction validity/invalidity selection screen G14 is depressed, namely when the density nonuniformity correction processing by the second correction value is set to be valid (Step S88; Yes), the control section 110 reads the first correction value from the nonvolatile memory 120 (Step S89), and then reads the second correction value from the nonvolatile memory 120 (Step S90).

The control section 110 sums (adds) up the first and second correction value, outputs the summed value to the density nonuniformity correction section 141 to execute the setting of the density nonuniformity correction section 141, and advances to Step S84. Since the setting of the density nonuniformity correction section 141 in Step S91 is same as Step S74, an explanation is omitted.

As described above, according to the second embodiment, it is possible to obtain the advantage same as that of the first embodiment, and it is also possible to execute the stabilization control processing which can obtain different results between the case that the correction function of the density nonuniformity correction processing is set to be invalid and the case that the function is set to be valid by storing two kinds of the correction value which are the first correction value not to be changed and the second correction value capable of being changed.

Although an example where the ROM or the nonvolatile memory 120 is used as a computer readable medium for the program of the present invention is described, the present invention is not limited to the example.

As other computer readable medium, a nonvolatile memory such as a flash memory and a portable recording medium such as a CD-ROM can be used.

Moreover, as a medium which provides program data of the present invention through communication line, carrier wave can be applied to the present invention.

Furthermore, the present invention is not limited to contents of the above-described embodiments, and can be changed without departing from the scope of the present invention.

According to one aspect of the present invention, an image forming apparatus includes: a density nonuniformity correction section to execute a density nonuniformity correction processing in a main scanning direction to image data which is input; and a control section to control an execution of a stabilization control processing, and to control an execution of the density nonuniformity correction processing by the density nonuniformity correction section, wherein the control section sets a correction function of the density nonuniformity correction section to be invalid when the stabilization control processing is regularly executed.

According to one aspect of the present invention, a stabilization control method in an image forming apparatus which includes a density nonuniformity correction section to execute a density nonuniformity correction processing in a main scanning direction to image data which is input, the method includes: setting a correction function of the density nonuniformity correction section to be invalid when the stabilization control processing is regularly executed, which density nonuniformity correction section executes the density nonuniformity correction processing in the main scanning.

Since the image forming apparatus or the stabilization control method can remove and validate the correction function of the density nonuniformity correction section when the stabilization control processing is regularly executed, it is possible to reduce the change in the color shades before and after the stabilization control even when the density uniformity correction is executed before the stabilization control is executed.

Preferably, the density nonuniformity correction section includes a switch section to switch validity/invalidity of the execution of the density nonuniformity correction section, and the control section allows the switch section to switch the execution to an invalidity status and executes the stabilization control processing when the correction function of the density nonuniformity correction processing is set to be invalid.

Preferably, the method further includes: allowing a switch section to switch an execution of the density nonuniformity correction section to the invalidity status and executing the stabilization control processing when the correction function of the density nonuniformity correction processing is set to be invalid, which switch section switches validity/ invalidity of the execution.

Moreover, by switching the execution to the invalidity status by the switch section and setting the execution of the density nonuniformity correction section to be valid or invalid, it is possible to invalidate the correction function of the density nonuniformity correction processing at the time of the stabilization control processing.

Preferably, the density nonuniformity correction section includes a register in which a correction value to be used in the density nonuniformity correction processing is stored, and the control section changes the correction value in the register to an invalidity correction value by which same result as the case that the correction function of the density nonuniformity correction processing is invalid can be obtained and executes the stabilization control processing when the correction function of the density nonuniformity correction processing is set to be invalid.

Preferably, the method further includes: changing a correction value stored in a register and used in the density nonuniformity correction processing to an invalidity correction value by which same result as the case that the correction function of the density nonuniformity correction processing is invalid can be obtained when the correction function of the density nonuniformity correction processing is set to be invalid.

Moreover, by changing the correction value in the register to the invalidity correction value, it is possible to invalidate the correction function of the density nonuniformity correction processing at the time of the stabilization control processing.

Preferably, the apparatus further includes: a sensor to be used in the stabilization control processing, wherein the control section changes a correction value for an pixel at a position corresponding to a position in the main scanning direction in the sensor to an invalidity correction value by which same result as the case that the correction function of the density nonuniformity correction processing is invalid can be obtained and executes the stabilization control processing when the correction function of the density nonuniformity correction processing is set to be invalid.

Preferably, the method further includes: changing a correction value for an pixel at a position corresponding to a position in the main scanning direction in a sensor to an invalidity correction value by which same result as the case that the correction function of the density nonuniformity correction processing is invalid can be obtained when the correction function of the density nonuniformity correction processing is set to be invalid, which sensor is used in the stabilization control processing.

Moreover, by changing the correction value for the pixel at the position corresponding to the sensor influenced by the correction function of the density nonuniformity correction processing to the invalidity correction value, it is possible to invalidate the correction function of the density nonuniformity correction processing at the time of the stabilization control processing.

Preferably, the apparatus further includes: a first input section to receive an instruction to execute the stabilization control processing; and a second input section to receive an instruction to validate or invalidate the execution of the density nonuniformity correction section, wherein the control section allows the density nonuniformity correction section to execute depending on the instruction from the second input section when the stabilization control processing is executed based on the instruction to execute the stabilization control processing from the first input section.

Preferably, the method further includes: receiving a first input of an instruction to execute the stabilization control processing; receiving a second input of an instruction to validate or invalidate the execution of the density nonuniformity correction section; and allowing the density nonuniformity correction section to execute depending on the second input of the instruction when the stabilization control processing is executed based on the first input of the instruction to execute the stabilization control processing.

Moreover, in addition to the regular execution time of the stabilization control processing, when a user instructs to execute the stabilization control, it is possible to execute the stabilization control processing according to user's intent by switching the execution of the density nonuniformity correction section to the validity or invalidity status. As a result, user-friendliness can be improved.

Preferably, the apparatus further includes: a storage section to store a first correction value previously set and a second correction value different from the first correction value; and a set section to set the second correction value, wherein the control section sets the first correction value in the density nonuniformity correction section and executes the stabilization control processing when the correction function of the density nonuniformity correction processing is set to be invalid as the stabilization control processing is executed, and the control section sets the first correction value and the second correction value in the density nonuniformity correction section and executes the stabilization control processing when the correction function of the density nonuniformity correction processing is set to be valid as the stabilization control processing is executed.

Preferably, the method further includes: setting a second correction value which is different from a first correction value previously set in a storage section to store the first correction value and the second correction value in the storage section; setting the first correction value in the density nonuniformity correction section and executes the stabilization control processing when the correction function of the density nonuniformity correction processing is set to be invalid as the stabilization control processing is executed; and setting the first correction value and the second correction value in the density nonuniformity correction section and executes the stabilization control processing when the correction function of the density nonuniformity correction processing is set to be valid as the stabilization control processing is executed.

Moreover, by storing two kinds of correction values of the first correction value which is not changed and the second correction value which can be changed, it is possible to execute the stabilization control processing which can obtain the different results between the case that the correction function of the density nonuniformity correction processing is invalid and the case that the correction function is valid.

Preferably, the density nonuniformity correction section stores correction values of a plurality of correction reference positions in the main scanning direction in a register, and corrects a density of each pixel of the image data based on a result of a linear interpolation between the correction reference positions to correct a density nonuniformity in the main scanning direction.

Preferably, the apparatus further includes: an operation section to receive an input to adjust each of the correction values of the correction reference positions.

Preferably, the method further includes: receiving on an operation section an input to adjust each of the correction values of the correction reference positions.

Preferably, the image forming apparatus forms a color image including a plurality of colors, and the operation section receives an instruction to validate or invalidate the density nonuniformity correction processing for each of the colors.

Preferably, the method further includes: receiving on the operation section an instruction to validate or invalidate the density nonuniformity correction processing for each of the colors.

Preferably, the control section sets the correction function of the density nonuniformity correction section to be invalid when the stabilization control processing is regularly executed, and the control section changes setting of the correction function of the density nonuniformity correction section to be valid or invalid according to an instruction from the control section when the stabilization control processing is executed according to an instruction from an operation section.

Preferably, the method further includes: changing setting of the correction function of the density nonuniformity correction section to be valid or invalid according to an instruction from the control section when the stabilization control processing is executed according to an instruction from an operation section.

## Claims

**1.** An image forming apparatus comprising:

a density nonuniformity correction section to execute a density nonuniformity correction processing in a main scanning direction to image data which is input; and
a control section to control an execution of a stabilization control processing, and to control an execution of the density nonuniformity correction processing by the density nonuniformity correction section,

wherein the control section sets a correction function of the density nonuniformity correction section to be invalid when the stabilization control processing is regularly executed.

**2.** The image forming apparatus of claim 1,
wherein the density nonuniformity correction section includes a switch section to switch validity/invalidity of the execution of the density nonuniformity correction section,
and the control section allows the switch section to switch the execution to an invalidity status and executes the stabilization control processing when the correction function of the density nonuniformity correction processing is set to be invalid.

**3.** The image forming apparatus of claim 1,
wherein the density nonuniformity correction section includes a register in which a correction value to be used in the density nonuniformity correction processing is stored,
and the control section changes the correction value in the register to an invalidity correction value by which same result as the case that the correction function of the density nonuniformity correction processing is invalid can be obtained and executes the stabilization control processing when the correction function of the density nonuniformity correction processing is set to be invalid.

**4.** The image forming apparatus of claim 1 further comprising:

a sensor to be used in the stabilization control processing,
wherein the control section changes a correction value for an pixel at a position corresponding to a position in the main scanning direction in the sensor to an invalidity correction value by which same result as the case that the correction function of the density nonuniformity correction processing is invalid can be obtained and executes the stabilization control processing when the correction function of the density nonuniformity correction processing is set to be invalid.

**5.** The image forming apparatus of claim 1 further comprising:

a first input section to receive an instruction to execute the stabilization control processing; and
a second input section to receive an instruction to validate or invalidate the execution of the density nonuniformity correction section,

wherein the control section allows the density nonuniformity correction section to execute depending on the instruction from the second input section when the stabilization control processing is executed based on the instruction to execute the stabilization control processing from the first input section.

**6.** The image forming apparatus of claim 1 further comprising:

a storage section to store a first correction value previously set and a second correction value different from the first correction value; and
a set section to set the second correction value,

wherein the control section sets the first correction value in the density nonuniformity correction section and executes the stabilization control processing when the correction function of the density nonuniformity correction processing is set to be invalid as the stabilization control processing is executed, and the control section sets the first correction value and the second correction value in the density nonuniformity correction section and executes the stabilization control processing when the correction function of the density nonuniformity correction processing is set to be valid as the stabilization control processing is executed.

**7.** The image forming apparatus of claim 1,
wherein the density nonuniformity correction section stores correction values of a plurality of correction reference positions in the main scanning direction in a register, and corrects a density of each pixel of the image data based on a result of a linear interpolation between the correction reference positions to correct a density nonuniformity in the main scanning direction.

8. The image forming apparatus of claim 7 further comprising:

an operation section to receive an input to adjust each of the correction values of the correction reference positions.

9. The image forming apparatus of claim 8,
wherein the image forming apparatus forms a color image including a plurality of colors,
and the operation section receives an instruction to validate or invalidate the density nonuniformity correction processing for each of the colors.

10. The image forming apparatus of claim 1,
wherein the control section sets the correction function of the density nonuniformity correction section to be invalid when the stabilization control processing is regularly executed, and the control section changes setting of the correction function of the density nonuniformity correction section to be valid or invalid according to an instruction from the control section when the stabilization control processing is executed according to an instruction from an operation section.

11. A stabilization control method in an image forming apparatus which includes a density nonuniformity correction section to execute a density nonuniformity correction processing in a main scanning direction to image data which is input, the method comprising:

setting a correction function of the density nonuniformity correction section to be invalid when the stabilization control processing is regularly executed, which density nonuniformity correction section executes the density nonuniformity correction processing in the main scanning.

12. The stabilization control method of claim 11 further comprising:

allowing a switch section to switch an execution of the density nonuniformity correction section to an invalidity status and executing the stabilization control processing when the correction function of the density nonuniformity correction processing is set to be invalid, which switch section switches validity/invalidity of the execution.

13. The stabilization control method of claim 11 further comprising:

changing a correction value stored in a register and used in the density nonuniformity correction processing to an invalidity correction value by which same result as the case that the correction function of the density nonuniformity correction processing is invalid can be obtained when the correction function of the density nonuniformity correction processing is set to be invalid.

14. The stabilization control method of claim 11 further comprising:

changing a correction value for an pixel at a position corresponding to a position in the main scanning direction in a sensor to an invalidity correction value by which same result as the case that the correction function of the density nonuniformity correction processing is invalid can be obtained when the correction function of the density nonuniformity correction processing is set to be invalid, which sensor is used in the stabilization control processing.

15. The stabilization control method of claim 11 further comprising:

receiving a first input of an instruction to execute the stabilization control processing;
receiving a second input of an instruction to validate or invalidate the execution of the density nonuniformity correction section; and
allowing the density nonuniformity correction section to execute depending on the second input of the instruction when the stabilization control processing is executed based on the first input of the instruction to execute the stabilization control processing.

16. The stabilization control method of claim 11 further comprising:

setting a second correction value which is different from a first correction value previously set in a storage section to store the second correction value in the storage section;
setting the first correction value in the density nonuniformity correction section and executes the stabilization control processing when the correction function of the density nonuniformity correction processing is set to be invalid as the stabilization control processing is executed; and
setting the first correction value and the second correction value in the density nonuniformity correction section and executes the stabilization control processing when the correction function of the density nonuniformity correction processing is set to be valid as the stabilization control processing is executed.

**17.** The stabilization control method of claim 11,
wherein the density nonuniformity correction section stores correction values of a plurality of correction reference positions in the main scanning direction in a register, and corrects a density of each pixel of the image data based on a result of a linear interpolation between the correction reference positions to correct a density nonuniformity in the main scanning direction.

**18.** The stabilization control method of claim 17 further comprising:

receiving on an operation section an input to adjust each of the correction values of the correction reference positions.

**19.** The stabilization control method of claim 18 further comprising:

receiving on the operation section an instruction to validate or invalidate the density nonuniformity correction processing for each of the colors.

**20.** The stabilization control method of claim 11 further comprising:

changing setting of the correction function of the density nonuniformity correction section to be valid or invalid according to an instruction from the control section when the stabilization control processing is executed according to an instruction from an operation section.

FIG. 1

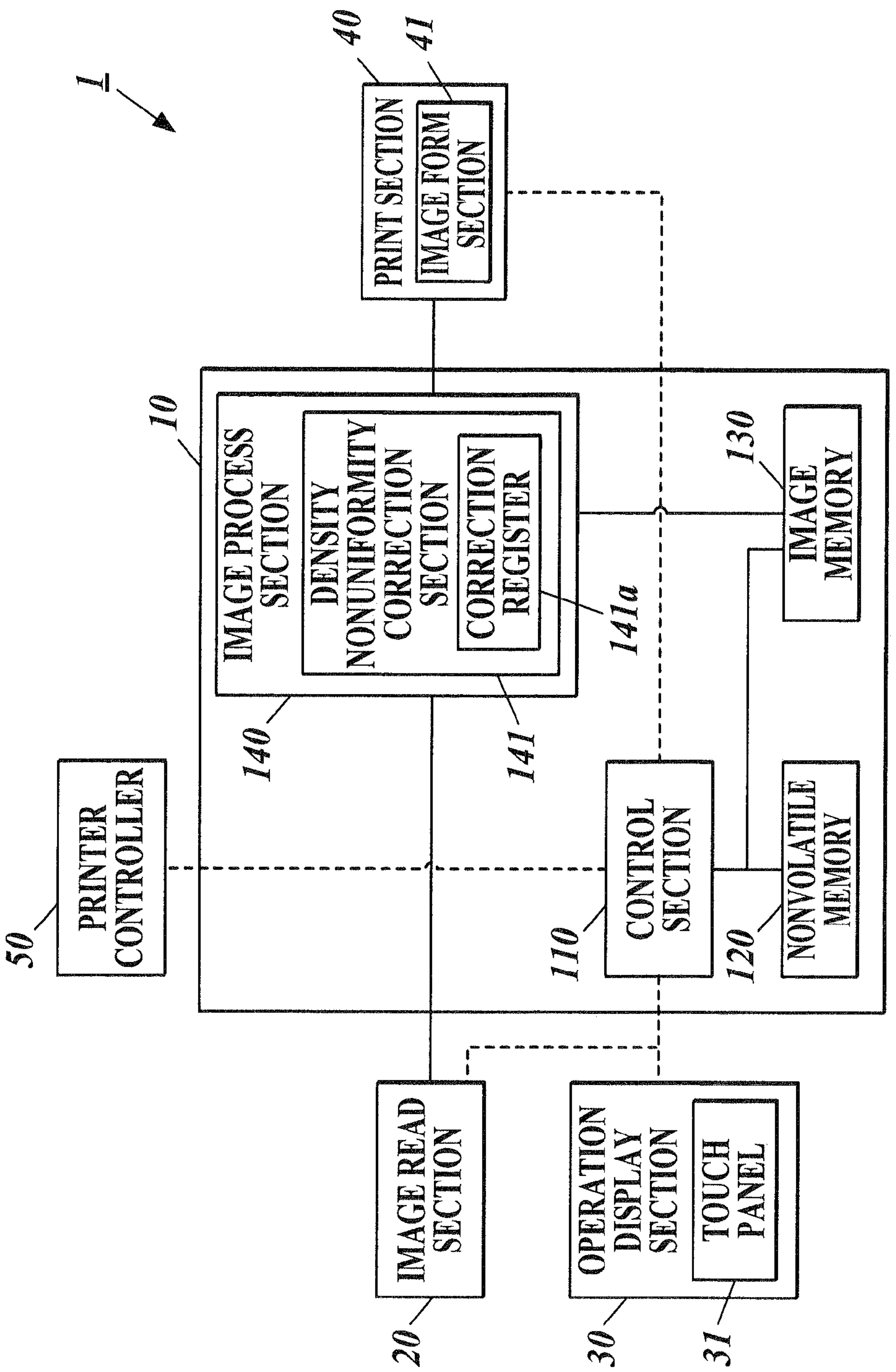
1
PRINT SECTION
IMAGE FORM SECTION
40
41
10
IMAGE PROCESS SECTION
DENSITY NONUNIFORMITY CORRECTION SECTION
CORRECTION REGISTER
141a
140
141
130
IMAGE MEMORY
PRINTER CONTROLLER
50
CONTROL SECTION
110
NONVOLATILE MEMORY
120
IMAGE READ SECTION
20
OPERATION DISPLAY SECTION
TOUCH PANEL
30
31

FIG.2

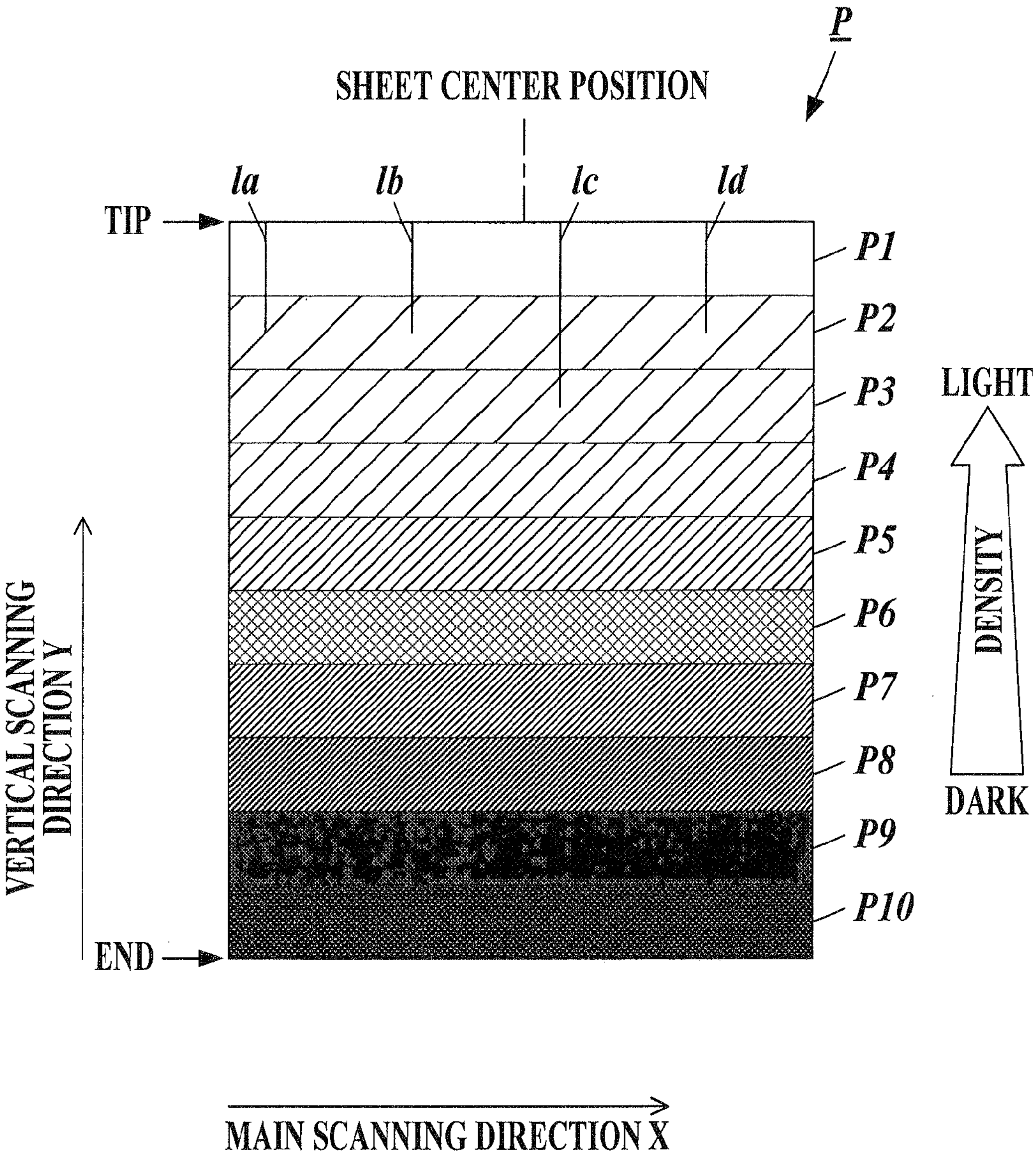
P
SHEET CENTER POSITION
la
lb
lc
ld
TIP
END
P1
P2
P3
P4
P5
P6
P7
P8
P9
P10
LIGHT
DENSITY
DARK
VERTICAL SCANNING DIRECTION Y
MAIN SCANNING DIRECTION X

# FIG.3

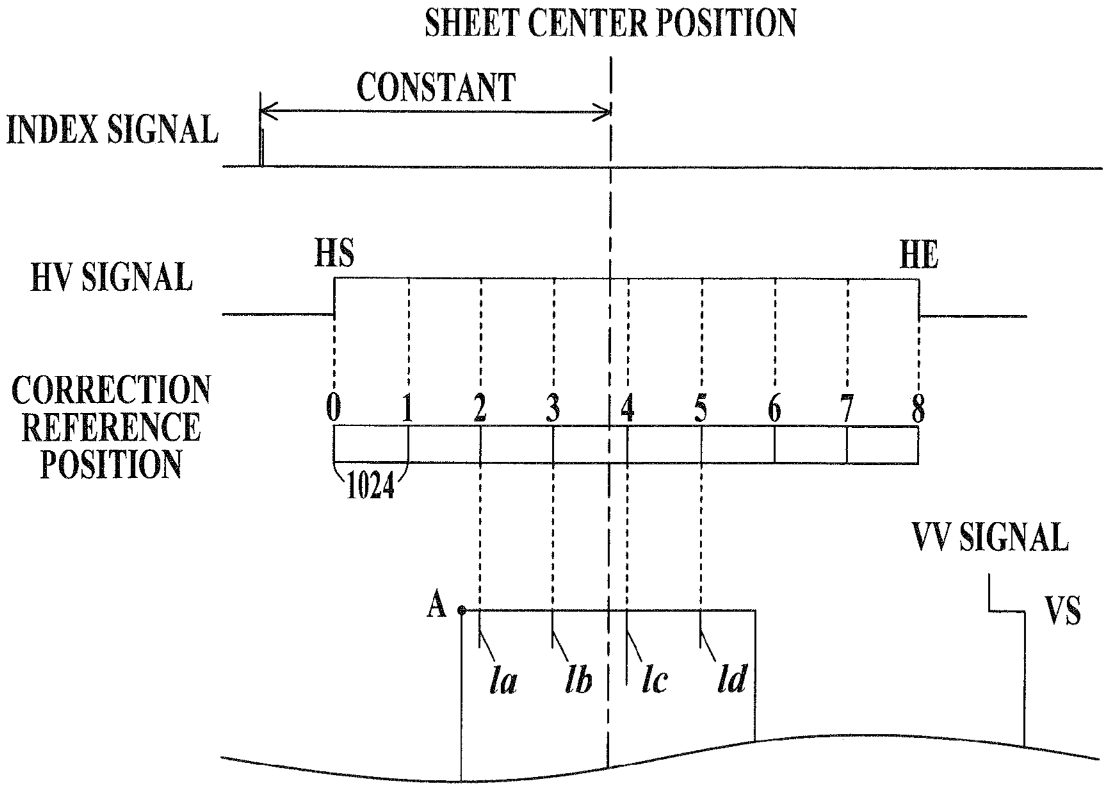
SHEET CENTER POSITION
CONSTANT
INDEX SIGNAL
HV SIGNAL
HS
HE
CORRECTION REFERENCE POSITION
0
1
2
3
4
5
6
7
8
1024
VV SIGNAL
VS
A
la
lb
lc
ld

# FIG.4

M

| ADDRESS | NAME | INTENDED PURPOSE |
|---|---|---|
| 00h | MODE[1:0] | CORRECTION MODE (0:CORRECTION IS INVALID, 1:CORRECTION IS VALID) |
| 01h | INIT[5:0] | INITIAL VALUE OF CORRECTION AMOUNT (TWO'S COMPLEMENT NUMBER[5:0];-32 TO +31) |
| 02h | DIF0[6:0] | CORRECTION AMOUNT DIFFERENCE 0 (CODE[6]+ABSOLUTE VALUE[5:0];-63 TO +63) |
| 03h | DIF1[6:0] | CORRECTION AMOUNT DIFFERENCE 1 (CODE[6]+ABSOLUTE VALUE[5:0];-63 TO +63) |
| 04h | DIF2[6:0] | CORRECTION AMOUNT DIFFERENCE 2 (CODE[6]+ABSOLUTE VALUE[5:0];-63 TO +63) |
| 05h | DIF3[6:0] | CORRECTION AMOUNT DIFFERENCE 3 (CODE[6]+ABSOLUTE VALUE[5:0];-63 TO +63) |
| 06h | DIF4[6:0] | CORRECTION AMOUNT DIFFERENCE 4 (CODE[6]+ABSOLUTE VALUE[5:0];-63 TO +63) |
| 07h | DIF5[6:0] | CORRECTION AMOUNT DIFFERENCE 5 (CODE[6]+ABSOLUTE VALUE[5:0];-63 TO +63) |
| 08h | DIF6[6:0] | CORRECTION AMOUNT DIFFERENCE 6 (CODE[6]+ABSOLUTE VALUE[5:0];-63 TO +63) |
| 09h | DIF7[6:0] | CORRECTION AMOUNT DIFFERENCE 7 (CODE[6]+ABSOLUTE VALUE[5:0];-63 TO +63) |
| ⋮ | ⋮ | ⋮ |

# FIG.5

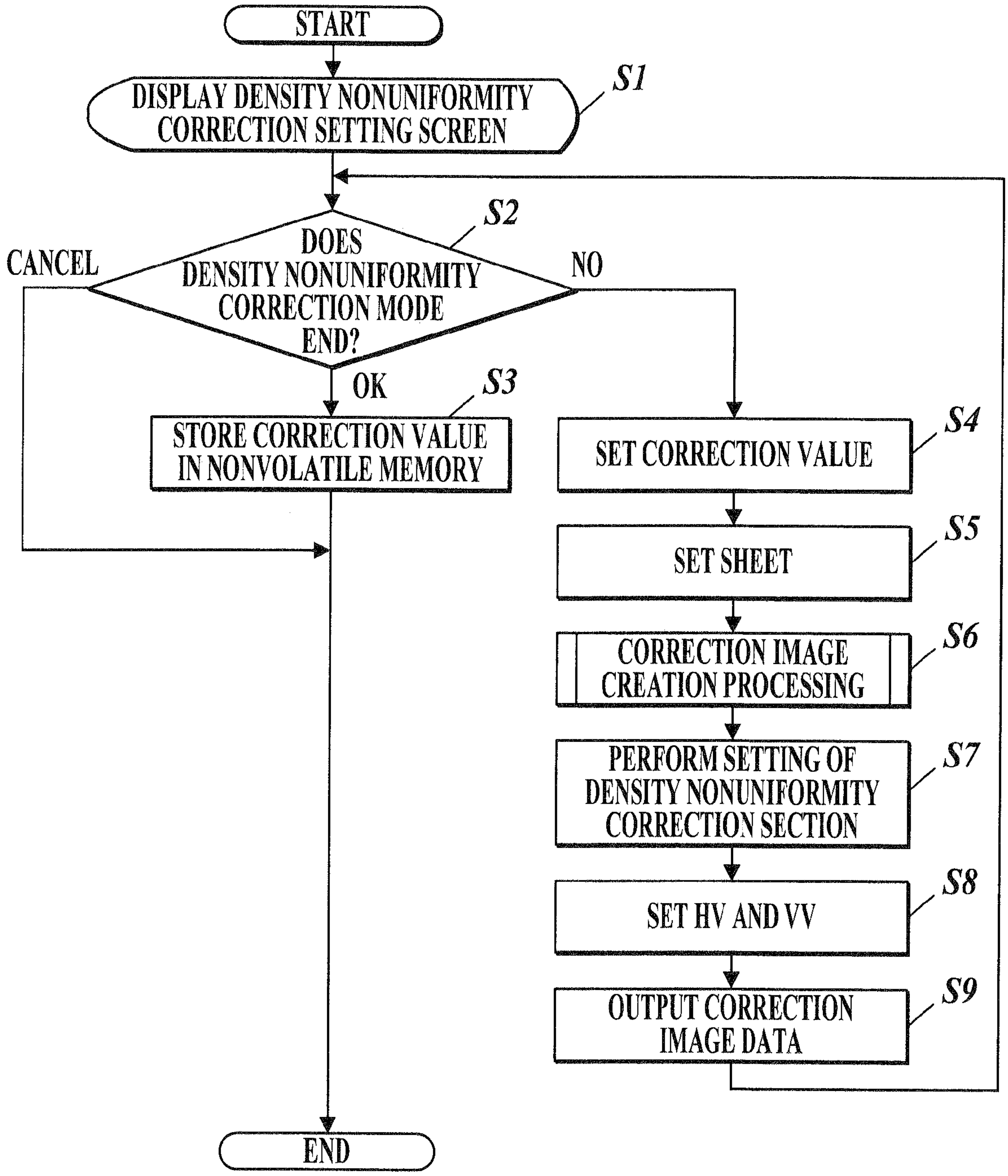
START
DISPLAY DENSITY NONUNIFORMITY CORRECTION SETTING SCREEN
S1
DOES DENSITY NONUNIFORMITY CORRECTION MODE END?
S2
CANCEL
NO
OK
S3
STORE CORRECTION VALUE IN NONVOLATILE MEMORY
SET CORRECTION VALUE
S4
SET SHEET
S5
CORRECTION IMAGE CREATION PROCESSING
S6
PERFORM SETTING OF DENSITY NONUNIFORMITY CORRECTION SECTION
S7
SET HV AND VV
S8
OUTPUT CORRECTION IMAGE DATA
S9
END

FIG.6

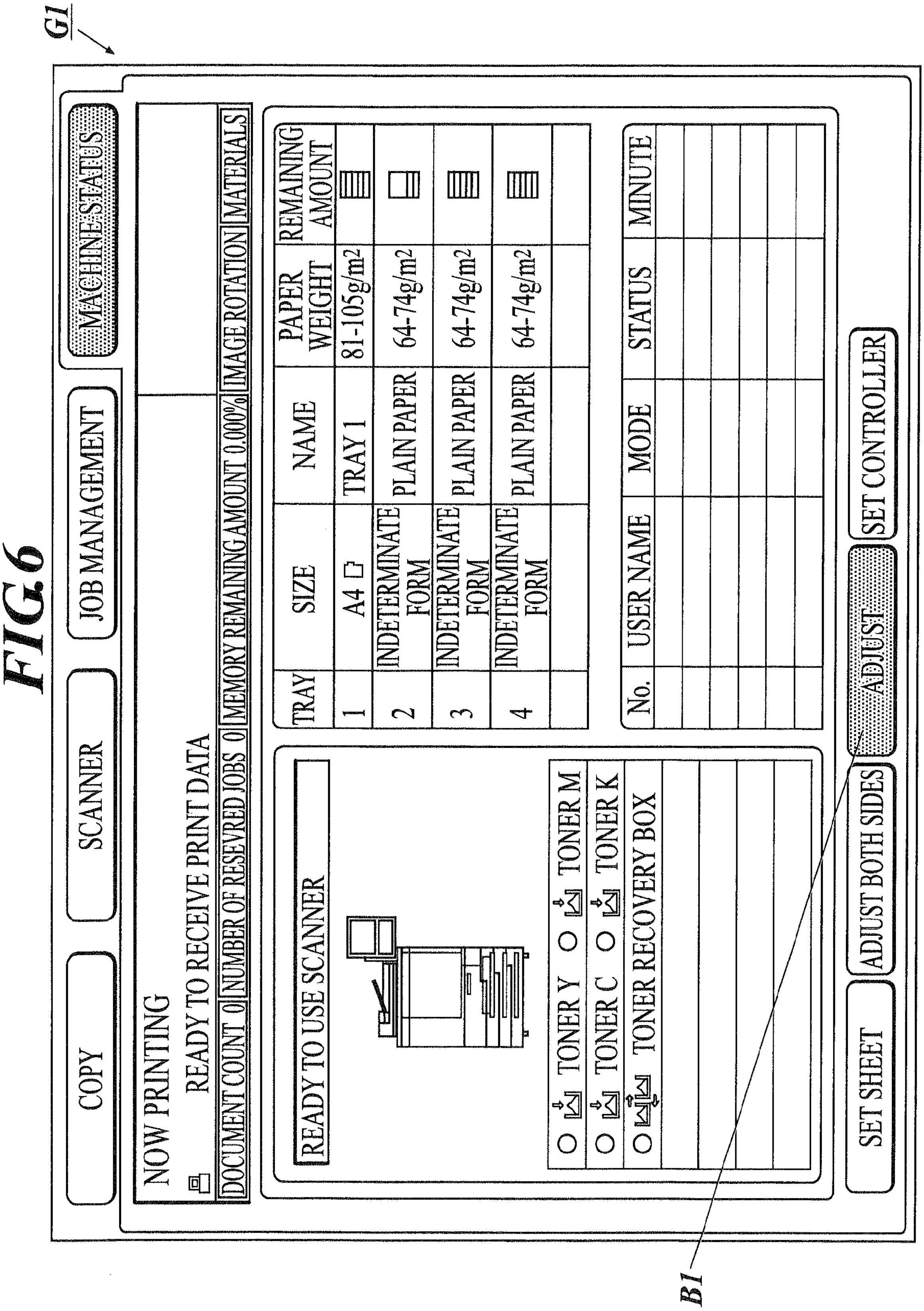
G1
COPY
SCANNER
JOB MANAGEMENT
MACHINE STATUS
NOW PRINTING
READY TO RECEIVE PRINT DATA
DOCUMENT COUNT 0
NUMBER OF RESEVRED JOBS 0
MEMORY REMAINING AMOUNT 0.000%
IMAGE ROTATION
MATERIALS
READY TO USE SCANNER
TONER Y
TONER M
TONER C
TONER K
TONER RECOVERY BOX
TRAY
SIZE
NAME
PAPER WEIGHT
REMAINING AMOUNT
1
A4
TRAY 1
81-105g/m2
2
INDETERMINATE FORM
PLAIN PAPER
64-74g/m2
3
INDETERMINATE FORM
PLAIN PAPER
64-74g/m2
4
INDETERMINATE FORM
PLAIN PAPER
64-74g/m2
No.
USER NAME
MODE
STATUS
MINUTE
SET SHEET
ADJUST BOTH SIDES
ADJUST
SET CONTROLLER
B1

FIG.7

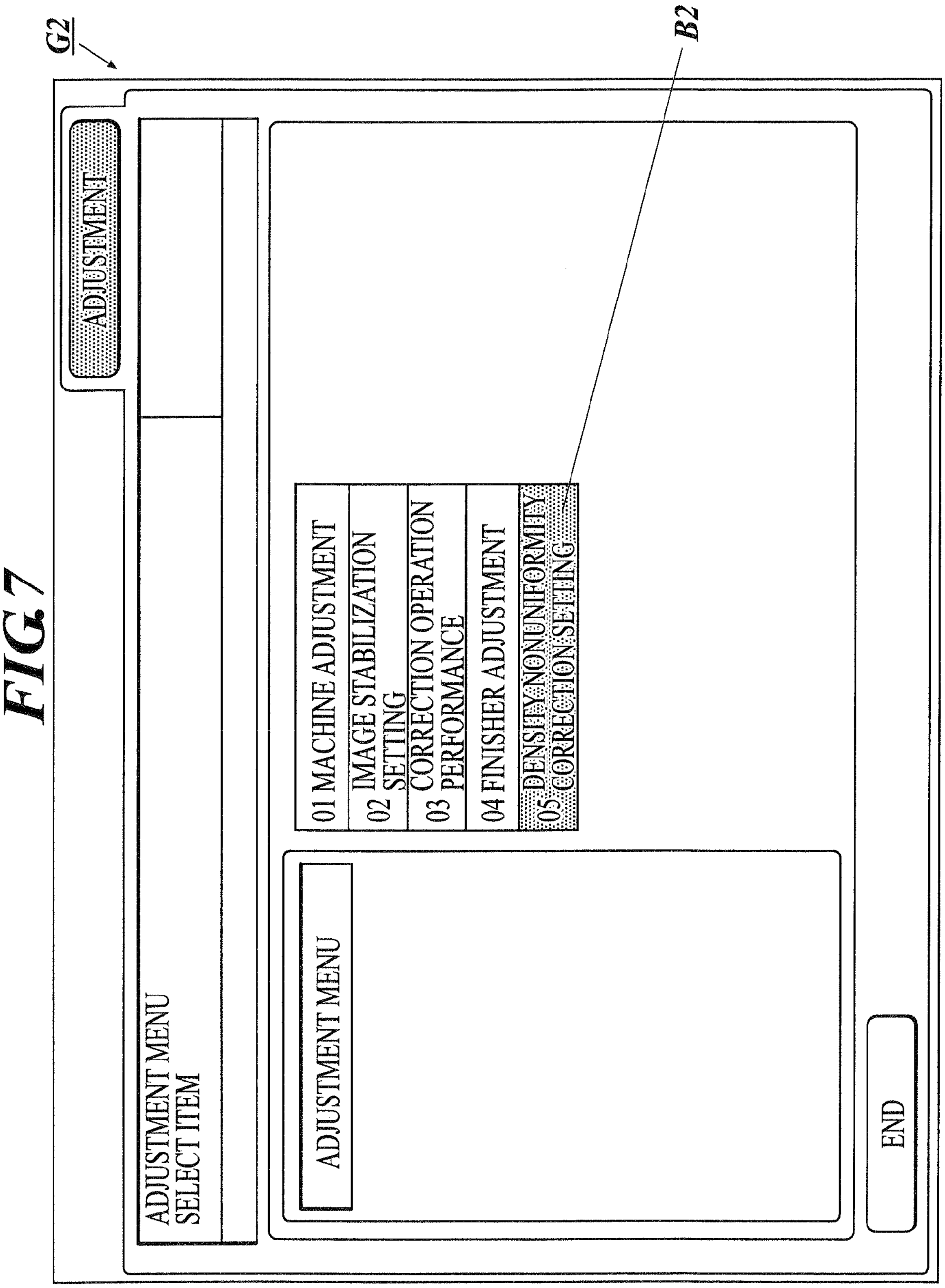
G2
B2
ADJUSTMENT
ADJUSTMENT MENU
SELECT ITEM
ADJUSTMENT MENU
01 MACHINE ADJUSTMENT
02 IMAGE STABILIZATION SETTING
03 CORRECTION OPERATION PERFORMANCE
04 FINISHER ADJUSTMENT
05 DENSITY NONUNIFORMITY CORRECTION SETTING
END

FIG.8

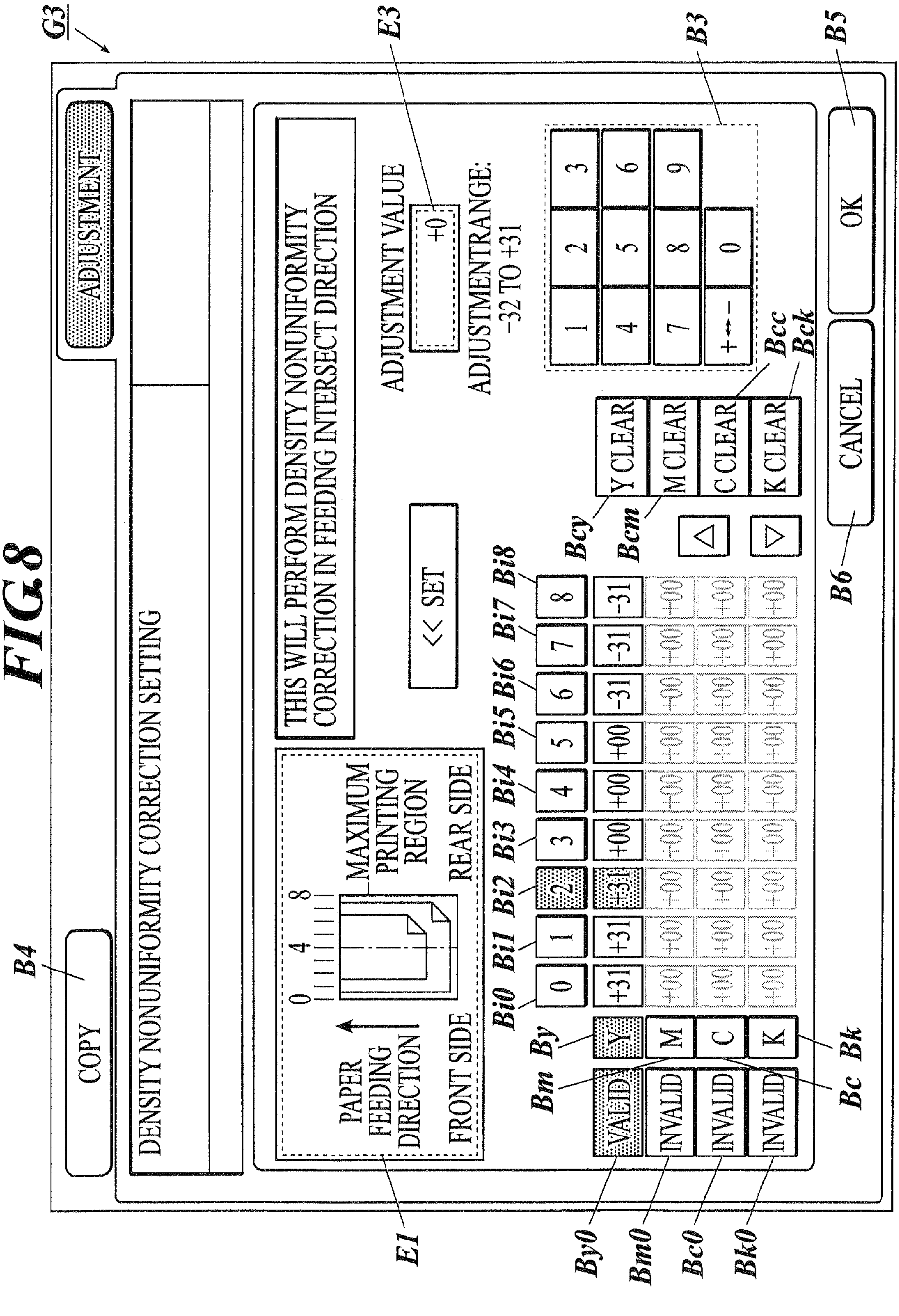
G3
B4
COPY
ADJUSTMENT
DENSITY NONUNIFORMITY CORRECTION SETTING
E1
PAPER FEEDING DIRECTION
FRONT SIDE
0 4 8
MAXIMUM PRINTING REGION
REAR SIDE
THIS WILL PERFORM DENSITY NONUNIFORMITY CORRECTION IN FEEDING INTERSECT DIRECTION
E3
ADJUSTMENT VALUE
+0
ADJUSTMENTRANGE: -32 TO +31
B3
1 2 3
4 5 6
7 8 9
+↔− 0
<< SET
By0 Bm0 Bc0 Bk0
VALID INVALID INVALID INVALID
By Bm Bc Bk
Y M C K
Bi0 Bi1 Bi2 Bi3 Bi4 Bi5 Bi6 Bi7 Bi8
0 1 2 3 4 5 6 7 8
+31 +31 +31 +00 +00 +00 -31 -31 -31
+00
Bcy Bcm Bcc Bck
Y CLEAR
M CLEAR
C CLEAR
K CLEAR
B5
OK
B6
CANCEL

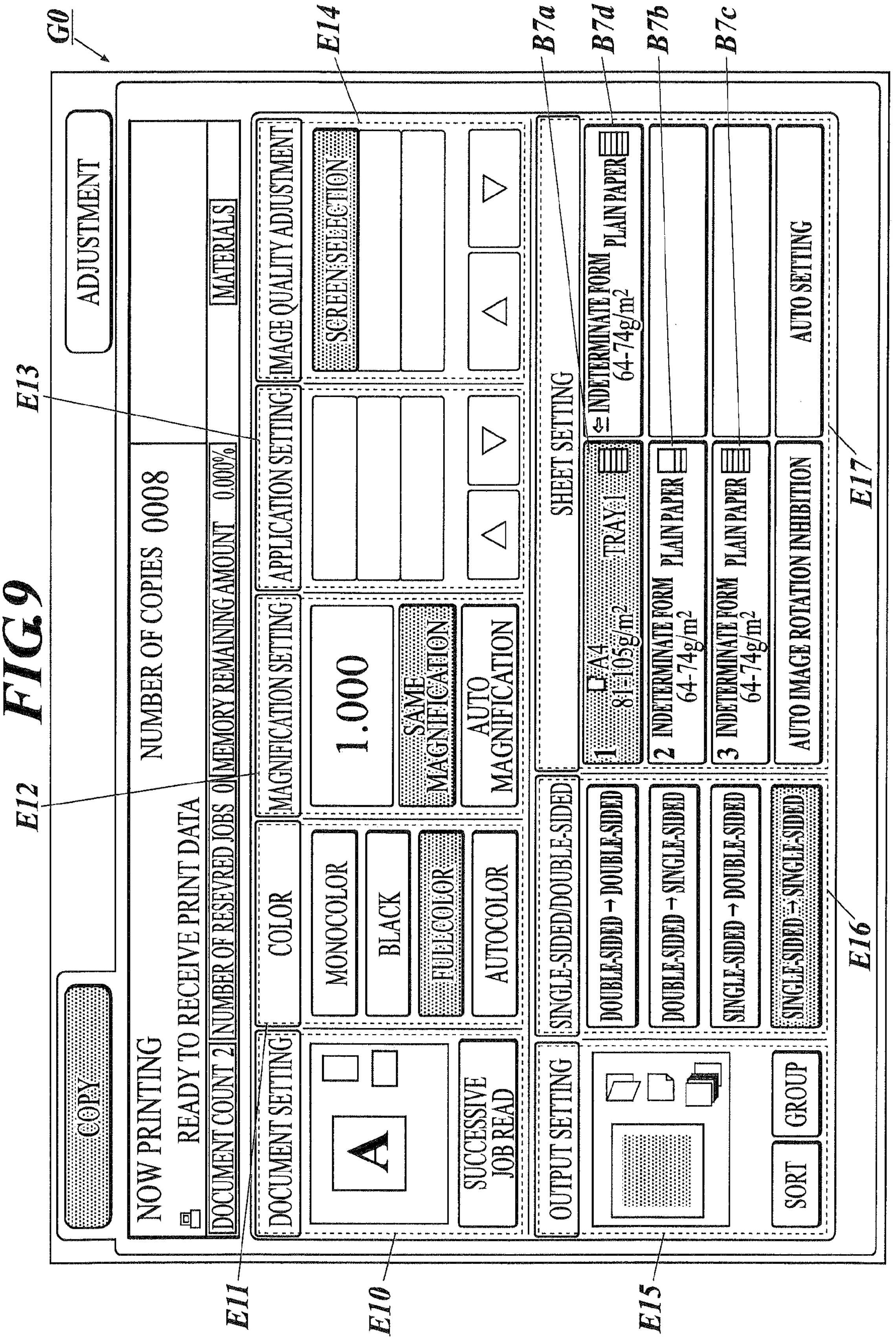
G0
COPY
ADJUSTMENT
NOW PRINTING
READY TO RECEIVE PRINT DATA
NUMBER OF COPIES 0008
DOCUMENT COUNT 2
NUMBER OF RESEVRED JOBS 0
MEMORY REMAINING AMOUNT 0.000%
MATERIALS
DOCUMENT SETTING
A
SUCCESSIVE JOB READ
COLOR
MONOCOLOR
BLACK
FULLCOLOR
AUTOCOLOR
MAGNIFICATION SETTING
1.000
SAME MAGNIFICATION
AUTO MAGNIFICATION
APPLICATION SETTING
IMAGE QUALITY ADJUSTMENT
SCREEN SELECTION
OUTPUT SETTING
SORT
GROUP
SINGLE-SIDED/DOUBLE-SIDED
DOUBLE-SIDED → DOUBLE-SIDED
DOUBLE-SIDED → SINGLE-SIDED
SINGLE-SIDED → DOUBLE-SIDED
SINGLE-SIDED → SINGLE-SIDED
SHEET SETTING
1 A4 81-105g/m2 TRAY 1
INDETERMINATE FORM 64-74g/m2 PLAIN PAPER
2 INDETERMINATE FORM 64-74g/m2 PLAIN PAPER
3 INDETERMINATE FORM 64-74g/m2 PLAIN PAPER
AUTO IMAGE ROTATION INHIBITION
AUTO SETTING
E10
E11
E12
E13
E14
E15
E16
E17
B7a
B7b
B7c
B7d

FIG.9

# FIG.10

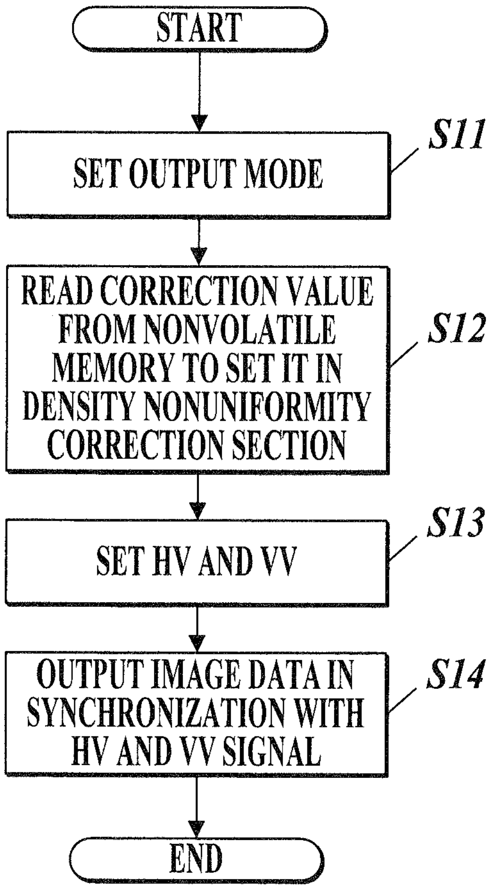
START
SET OUTPUT MODE
S11
READ CORRECTION VALUE FROM NONVOLATILE MEMORY TO SET IT IN DENSITY NONUNIFORMITY CORRECTION SECTION
S12
SET HV AND VV
S13
OUTPUT IMAGE DATA IN SYNCHRONIZATION WITH HV AND VV SIGNAL
S14
END

FIG.11

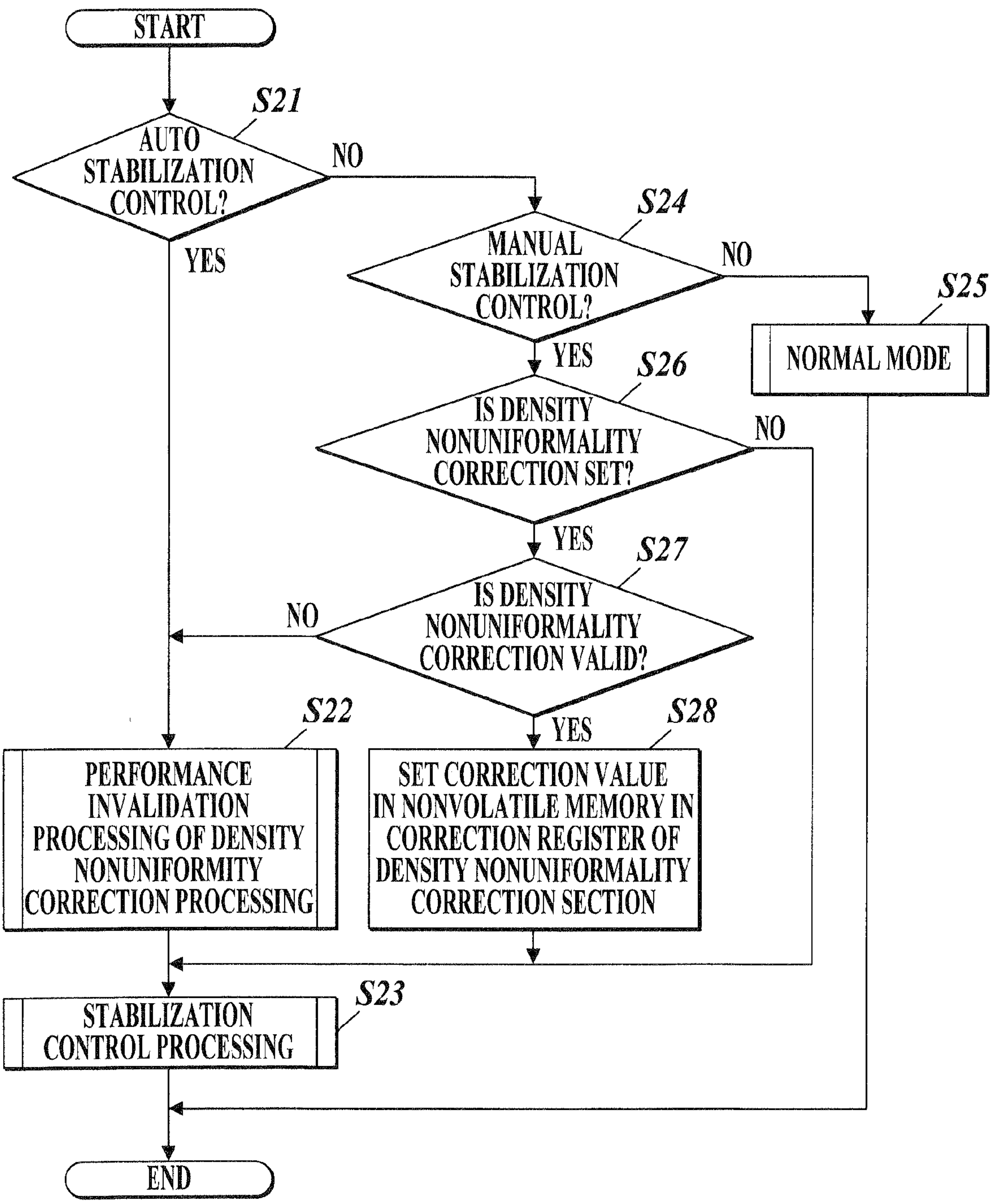
START
S21
AUTO STABILIZATION CONTROL?
NO
YES
S24
MANUAL STABILIZATION CONTROL?
NO
S25
NORMAL MODE
YES
S26
IS DENSITY NONUNIFORMALITY CORRECTION SET?
NO
YES
S27
IS DENSITY NONUNIFORMALITY CORRECTION VALID?
NO
YES
S22
PERFORMANCE INVALIDATION PROCESSING OF DENSITY NONUNIFORMITY CORRECTION PROCESSING
S28
SET CORRECTION VALUE IN NONVOLATILE MEMORY IN CORRECTION REGISTER OF DENSITY NONUNIFORMALITY CORRECTION SECTION
S23
STABILIZATION CONTROL PROCESSING
END

FIG.12

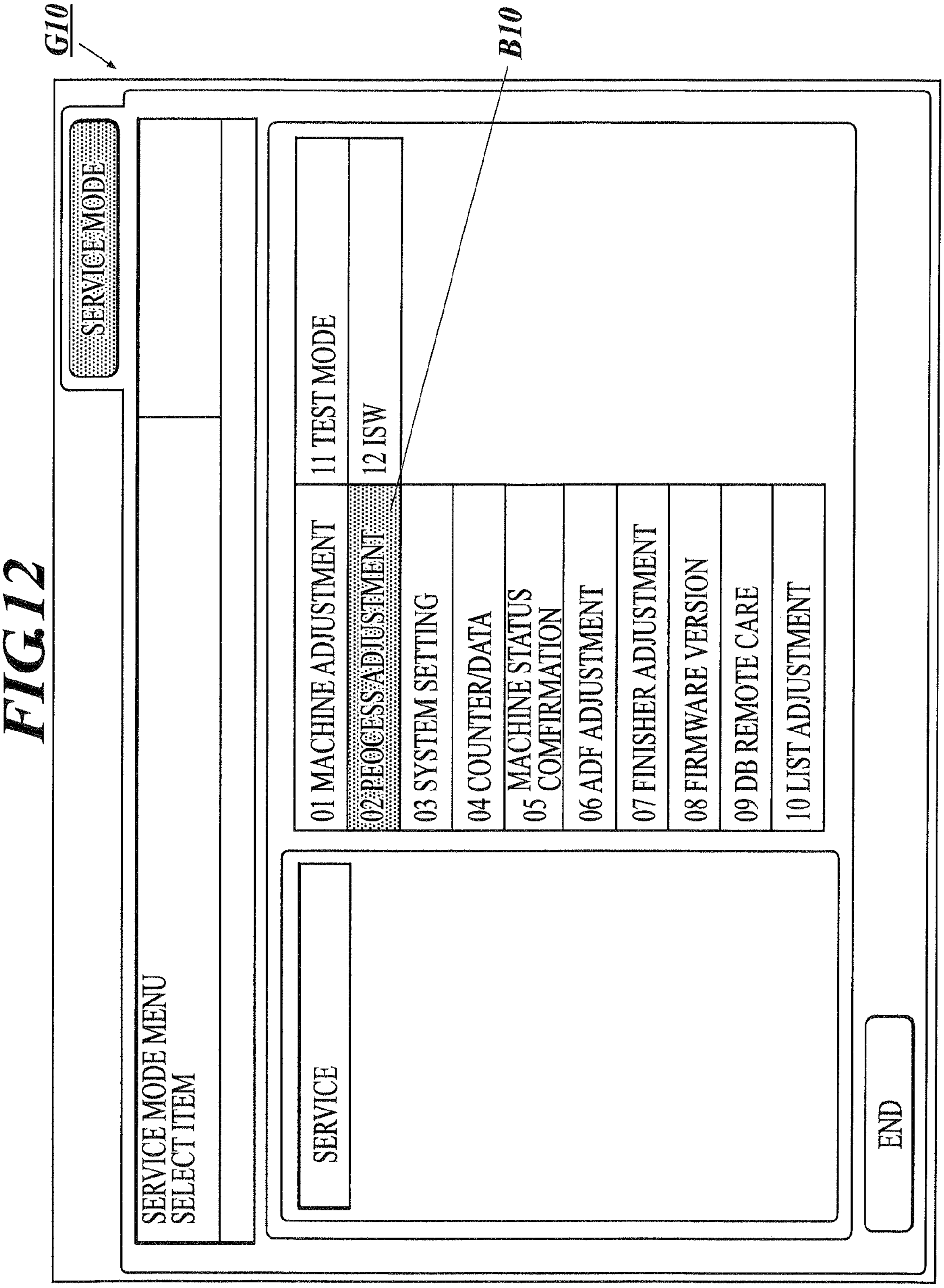
G10
B10
SERVICE MODE
SERVICE MODE MENU
SELECT ITEM
SERVICE
01 MACHINE ADJUSTMENT
02 PEOCESS ADJUSTMENT
03 SYSTEM SETTING
04 COUNTER/DATA
05 MACHINE STATUS COMFIRMATION
06 ADF ADJUSTMENT
07 FINISHER ADJUSTMENT
08 FIRMWARE VERSION
09 DB REMOTE CARE
10 LIST ADJUSTMENT
11 TEST MODE
12 ISW
END

FIG.13

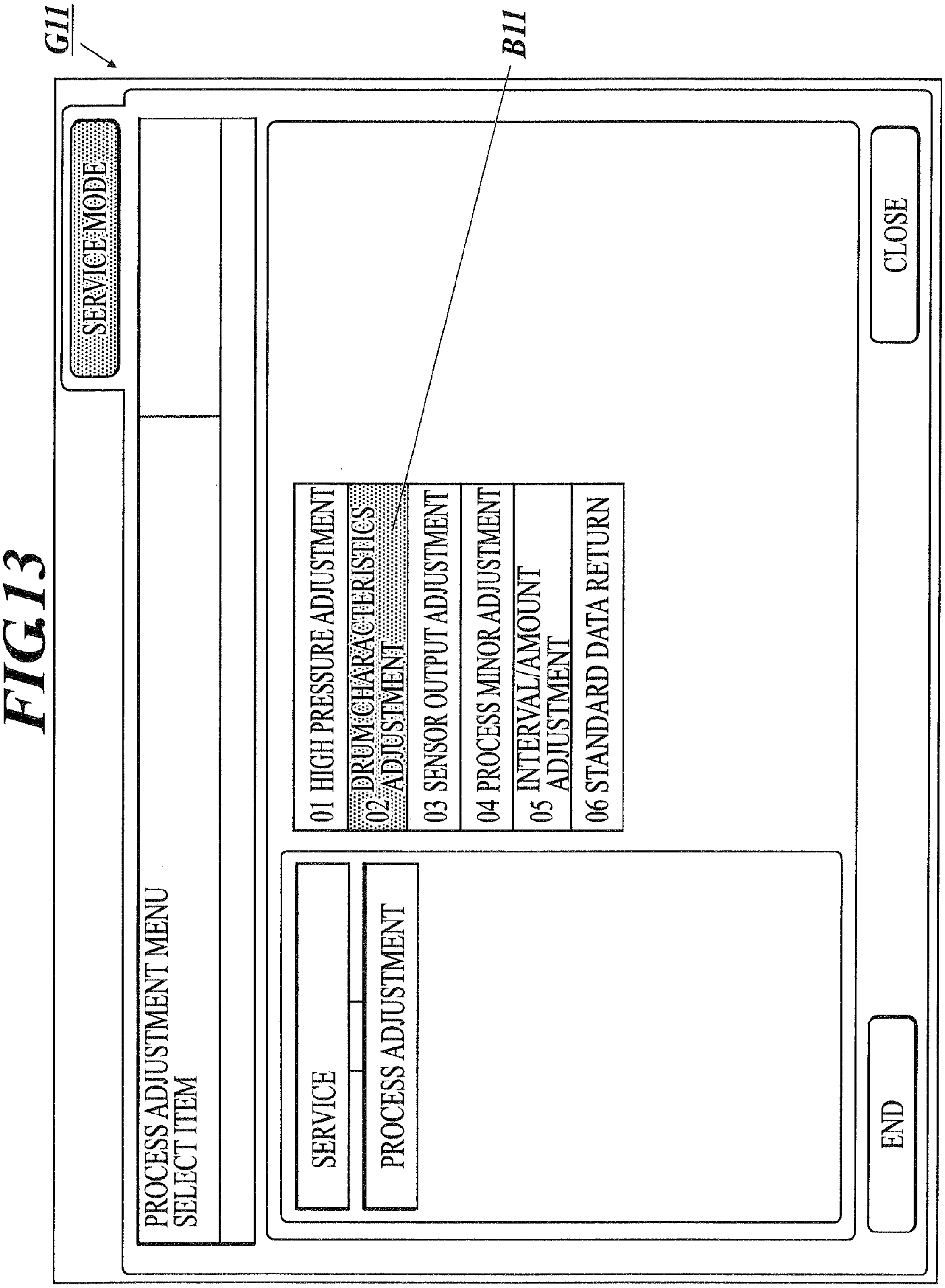
G11
B11
SERVICE MODE
PROCESS ADJUSTMENT MENU
SELECT ITEM
SERVICE
PROCESS ADJUSTMENT
01 HIGH PRESSURE ADJUSTMENT
02 DRUM CHARACTERISTICS ADJUSTMENT
03 SENSOR OUTPUT ADJUSTMENT
04 PROCESS MINOR ADJUSTMENT
05 INTERVAL/AMOUNT ADJUSTMENT
06 STANDARD DATA RETURN
END
CLOSE

FIG.14

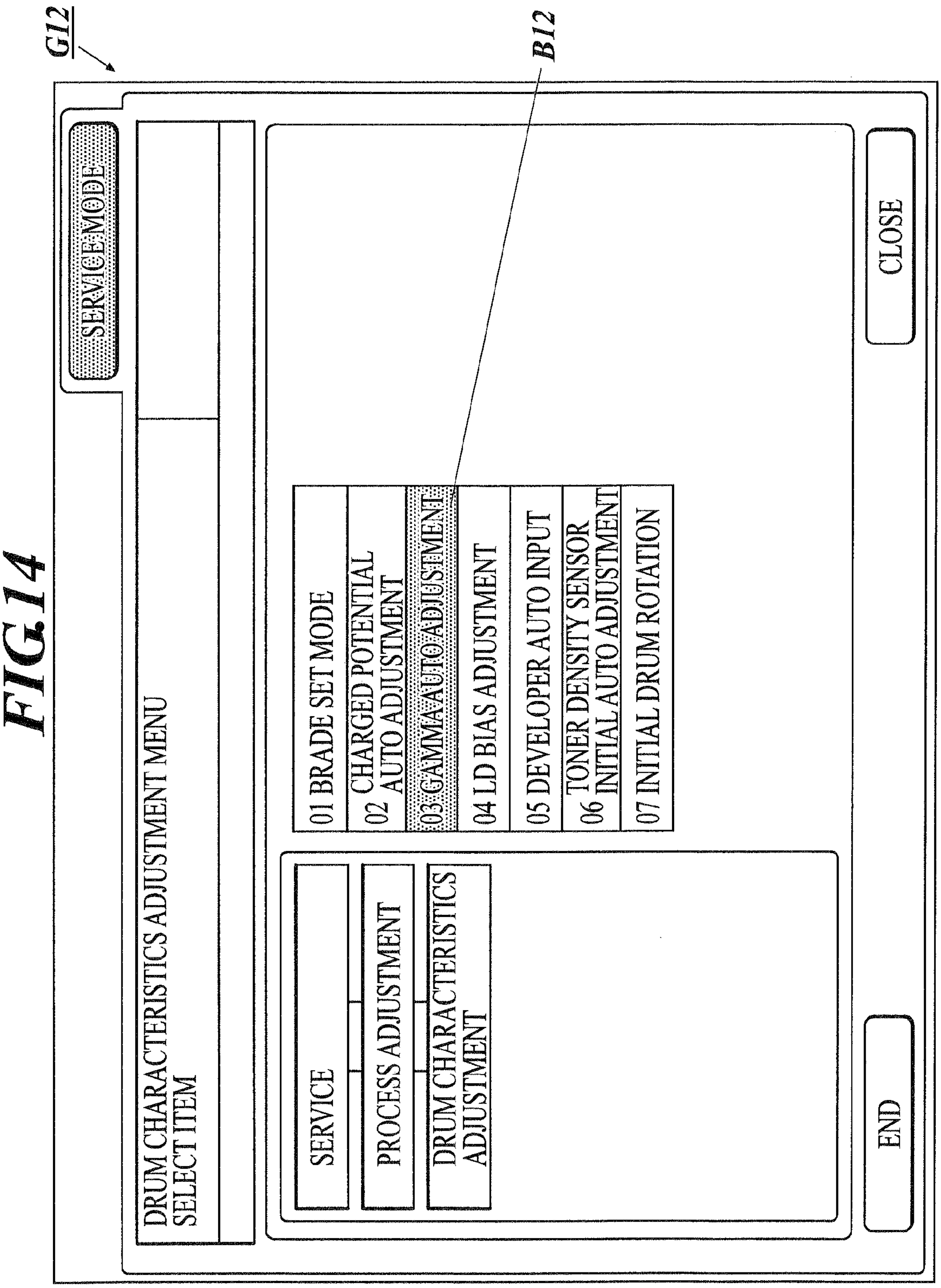
G12
B12
SERVICE MODE
DRUM CHARACTERISTICS ADJUSTMENT MENU
SELECT ITEM
SERVICE
PROCESS ADJUSTMENT
DRUM CHARACTERISTICS ADJUSTMENT
01 BRADE SET MODE
02 CHARGED POTENTIAL AUTO ADJUSTMENT
03 GAMMA AUTO ADJUSTMENT
04 LD BIAS ADJUSTMENT
05 DEVELOPER AUTO INPUT
06 TONER DENSITY SENSOR INITIAL AUTO ADJUSTMENT
07 INITIAL DRUM ROTATION
END
CLOSE

FIG.15

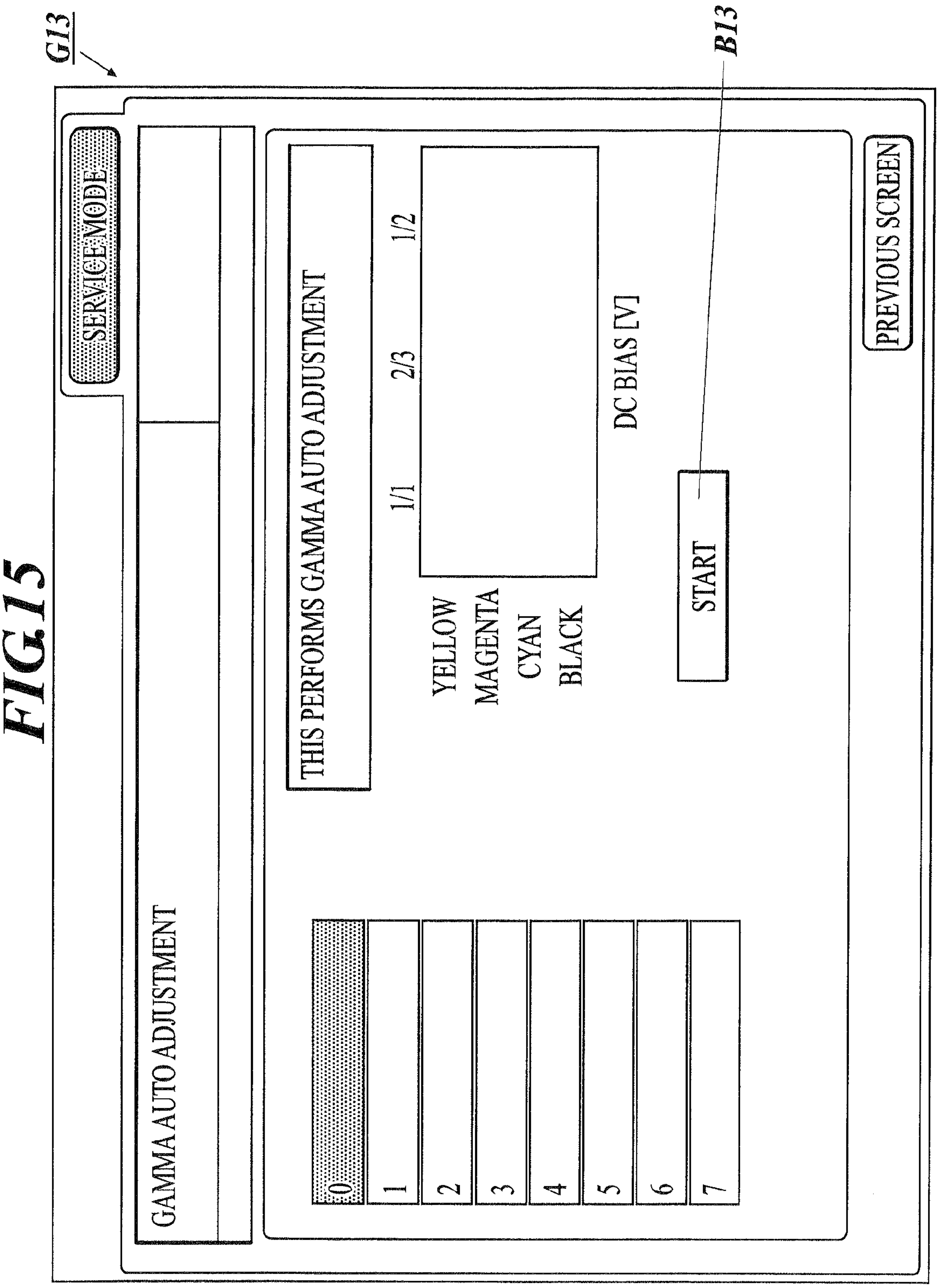
G13
B13
SERVICE MODE
GAMMA AUTO ADJUSTMENT
THIS PERFORMS GAMMA AUTO ADJUSTMENT
1/1
2/3
1/2
YELLOW
MAGENTA
CYAN
BLACK
DC BIAS [V]
START
0
1
2
3
4
5
6
7
PREVIOUS SCREEN

FIG.16

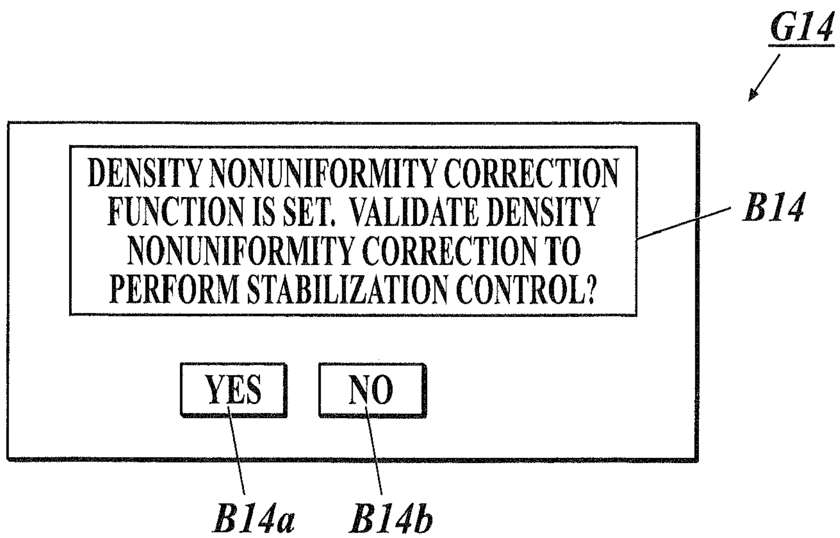
G14
DENSITY NONUNIFORMITY CORRECTION FUNCTION IS SET. VALIDATE DENSITY NONUNIFORMITY CORRECTION TO PERFORM STABILIZATION CONTROL?
B14
YES
NO
B14a
B14b

FIG.17

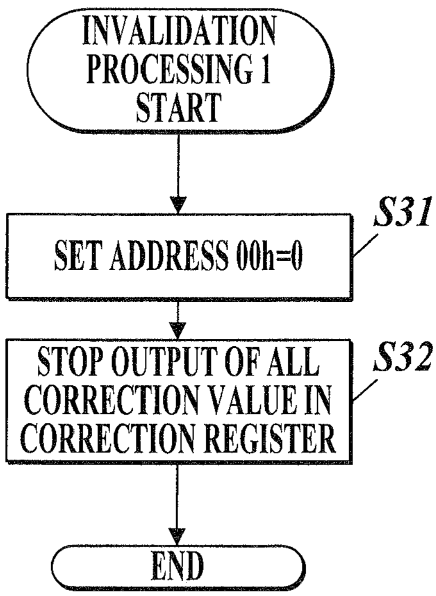
INVALIDATION PROCESSING 1 START
SET ADDRESS 00h=0
S31
STOP OUTPUT OF ALL CORRECTION VALUE IN CORRECTION REGISTER
S32
END

FIG. 18

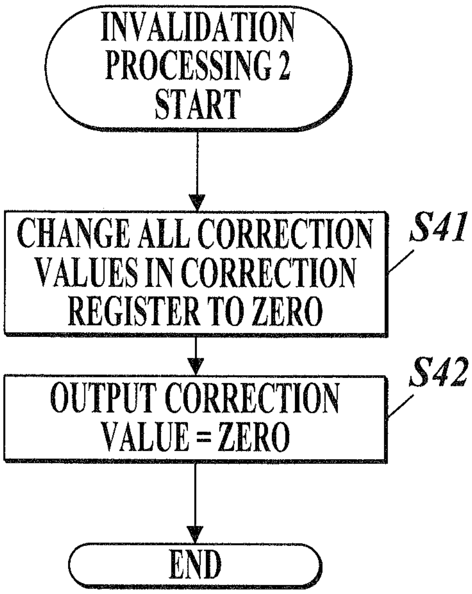
INVALIDATION PROCESSING 2 START
CHANGE ALL CORRECTION VALUES IN CORRECTION REGISTER TO ZERO
S41
OUTPUT CORRECTION VALUE = ZERO
S42
END

FIG.19

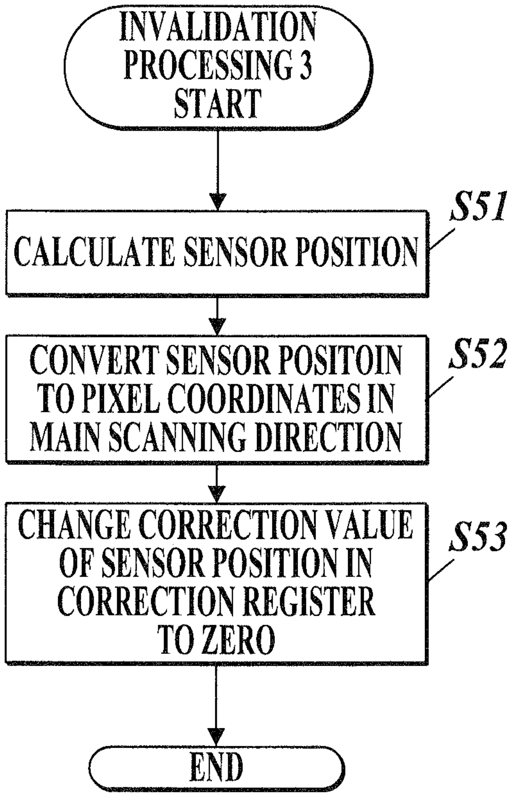
INVALIDATION PROCESSING 3 START
S51
CALCULATE SENSOR POSITION
S52
CONVERT SENSOR POSITOIN TO PIXEL COORDINATES IN MAIN SCANNING DIRECTION
S53
CHANGE CORRECTION VALUE OF SENSOR POSITION IN CORRECTION REGISTER TO ZERO
END

FIG.20

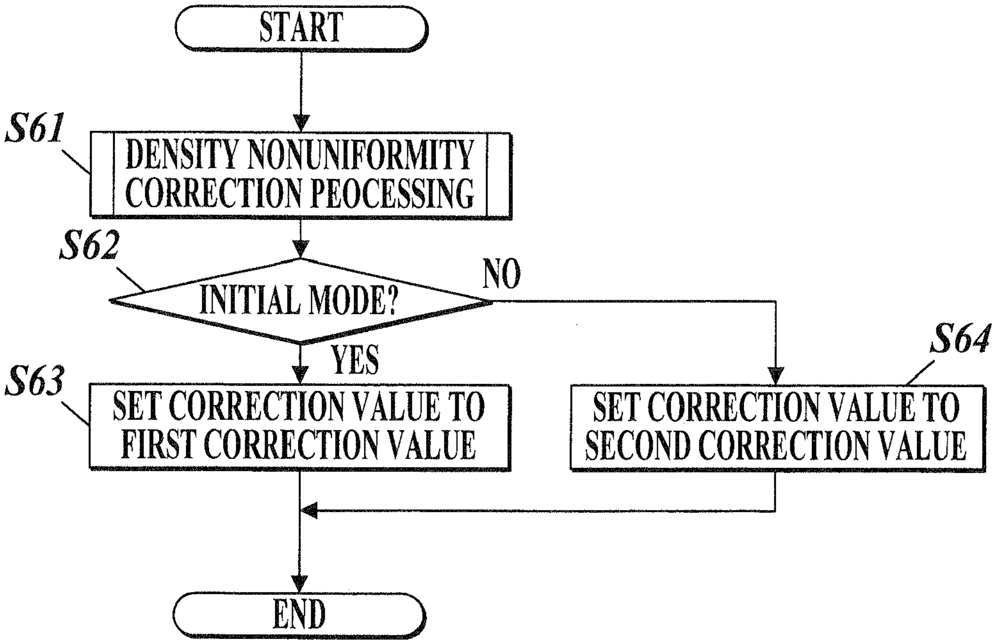
START
S61
DENSITY NONUNIFORMITY CORRECTION PEOCESSING
S62
INITIAL MODE?
NO
YES
S63
SET CORRECTION VALUE TO FIRST CORRECTION VALUE
S64
SET CORRECTION VALUE TO SECOND CORRECTION VALUE
END

FIG.21

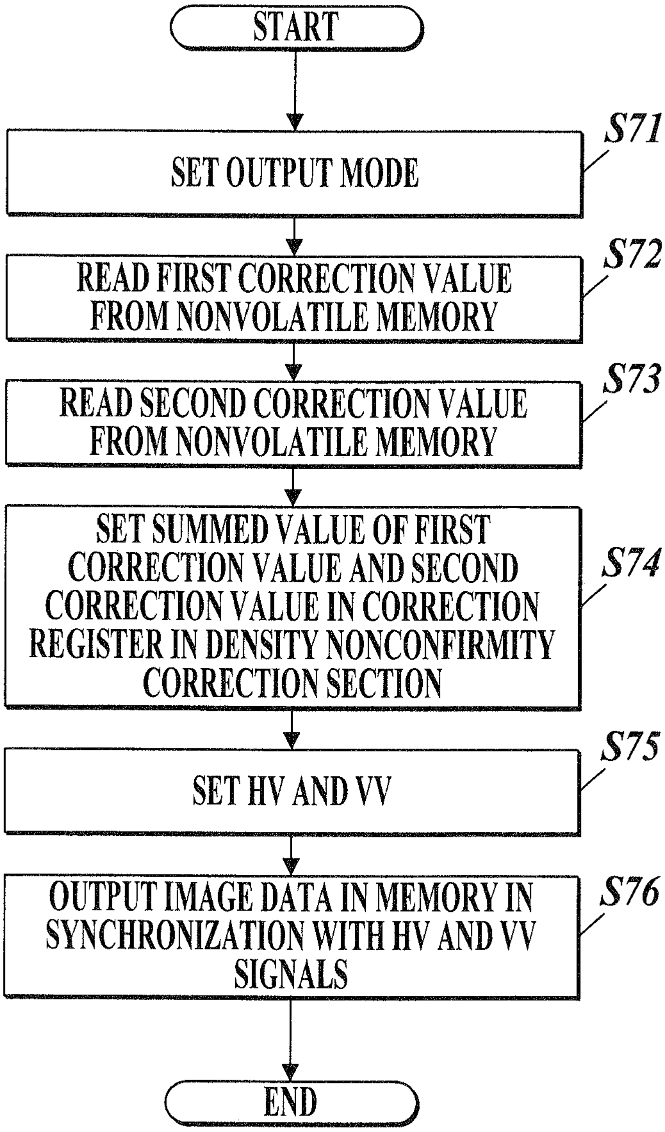
START
S71
SET OUTPUT MODE
S72
READ FIRST CORRECTION VALUE FROM NONVOLATILE MEMORY
S73
READ SECOND CORRECTION VALUE FROM NONVOLATILE MEMORY
S74
SET SUMMED VALUE OF FIRST CORRECTION VALUE AND SECOND CORRECTION VALUE IN CORRECTION REGISTER IN DENSITY NONCONFIRMITY CORRECTION SECTION
S75
SET HV AND VV
S76
OUTPUT IMAGE DATA IN MEMORY IN SYNCHRONIZATION WITH HV AND VV SIGNALS
END

*FIG.22*

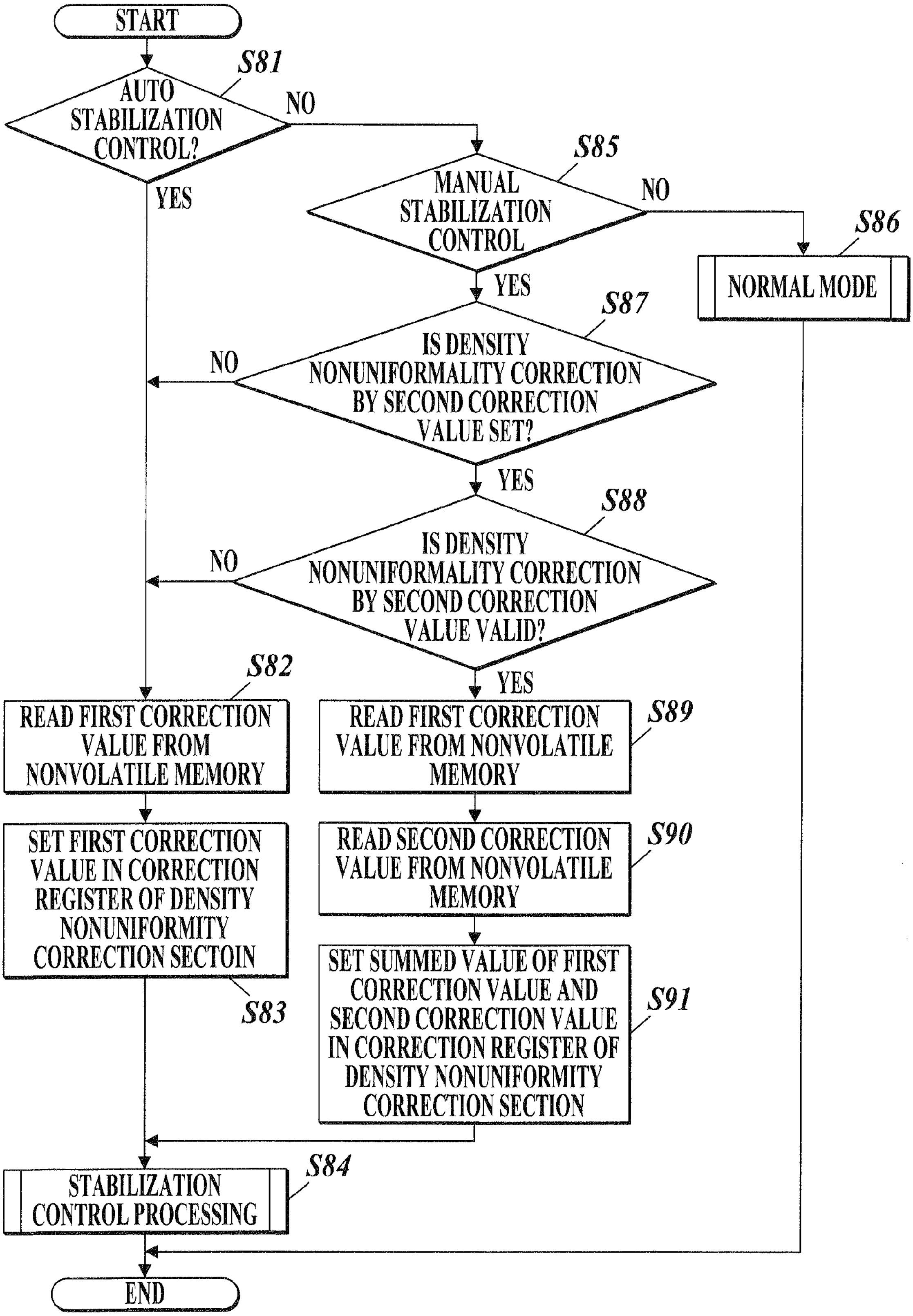
START
S81
AUTO STABILIZATION CONTROL?
NO
YES
S85
MANUAL STABILIZATION CONTROL
NO
S86
NORMAL MODE
YES
S87
IS DENSITY NONUNIFORMALITY CORRECTION BY SECOND CORRECTION VALUE SET?
NO
YES
S88
IS DENSITY NONUNIFORMALITY CORRECTION BY SECOND CORRECTION VALUE VALID?
NO
YES
S82
READ FIRST CORRECTION VALUE FROM NONVOLATILE MEMORY
S89
READ FIRST CORRECTION VALUE FROM NONVOLATILE MEMORY
SET FIRST CORRECTION VALUE IN CORRECTION REGISTER OF DENSITY NONUNIFORMITY CORRECTION SECTOIN
S83
S90
READ SECOND CORRECTION VALUE FROM NONVOLATILE MEMORY
S91
SET SUMMED VALUE OF FIRST CORRECTION VALUE AND SECOND CORRECTION VALUE IN CORRECTION REGISTER OF DENSITY NONUNIFORMITY CORRECTION SECTION
S84
STABILIZATION CONTROL PROCESSING
END

Europäisches Patentamt
European Patent Office
Office européen des brevets

# EUROPEAN SEARCH REPORT

Application Number
EP 08 17 0380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/134624 A1 (MIZES HOWARD A [US]) 23 June 2005 (2005-06-23) * paragraphs [0004], [0035], [0037], [0049] - [0051]; figures * ----- | 1,11 | INV. H04N1/00 H04N1/401 H04N1/407 H04N1/60 |
| A | JP 2002 135614 A (SHARP KK) 10 May 2002 (2002-05-10) * abstract; figure 31 * ----- | 1,11 | |

TECHNICAL FIELDS SEARCHED (IPC)

H04N

1

The present search report has been drawn up for all claims

| Place of search | Date of completion of the search | Examiner |
|---|---|---|
| Berlin | 9 April 2009 | Exner, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 08 17 0380

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2009

| Patent document cited in search report | Publication date | Patent family member(s) | Publication date |
|---|---|---|---|
| US 2005134624 A1 | 23-06-2005 | JP 2005182045 A<br>US 2006244776 A1 | 07-07-2005<br>02-11-2006 |
| JP 2002135614 A | 10-05-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007189655 A